(19) Europäisches Patentamt
European Patent Office
Office européen des brevets

(11) **EP 3 591 545 A1**

(12) **EUROPEAN PATENT APPLICATION**

(43) Date of publication:
**08.01.2020 Bulletin 2020/02**

(51) Int Cl.:
***G06F 17/30*** *(2006.01)*

(21) Application number: **18305896.5**

(22) Date of filing: **06.07.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
- **UNIVERSITE PARIS DESCARTES**
**75006 Paris (FR)**
- **CENTRE NATIONAL DE LA RECHERCHE SCIENTIFIQUE (CNRS)**
**75016 Paris (FR)**
- **Universite Paris 1 Pantheon-Sorbonne**
**75005 Paris (FR)**
- **COMMUNAUTE UNIVERSITES ET ETABLISSEMENTS UNIVERSITE COTE D'AZUR**
**06100 Nice (FR)**

(72) Inventors:
- **LATOUCHE, Pierre**
**77300 FONTAINEBLEAU (FR)**
- **BOUVEYRON, Charles**
**06000 NICE (FR)**
- **BERGÉ, Laurent**
**2741 Luxembourg (LU)**
- **CORNELI, Marco**
**06100 Nice (FR)**

(74) Representative: **Regimbeau**
**20, rue de Chazelles**
**75847 Paris Cedex 17 (FR)**

(54) **METHOD FOR CO-CLUSTERING SENDERS AND RECEIVERS BASED ON TEXT OR IMAGE DATA FILES**

(57) The invention relates to a co-clustering method, in which a set of digital files produced by senders towards receivers is processed, each file corresponding to a file vector and containing images and/or text data, said method comprising:
construction of an incidence matrix $A = (A_{ij})$ with rows i corresponding to senders and columns j corresponding to receivers,
initialization of a first estimated row clustering $Y=(Y_1, Y_2,...,Y_M)$ and a first estimated column clustering $X=(X_1, X_2,...,X_D)$,
inference of a generative model, comprising updating topics k which are a set of elements which co-occur in the file vectors, and updating the estimated row clustering Y and the estimated column clustering X on the basis of a statistical criterion, and repeating inference until a convergence criterion is fulfilled,
resulting in a co-clustering of rows and columns which is a function of the co-occurrence of elements belonging to the same topics in the file vectors.

**FIG. 3**

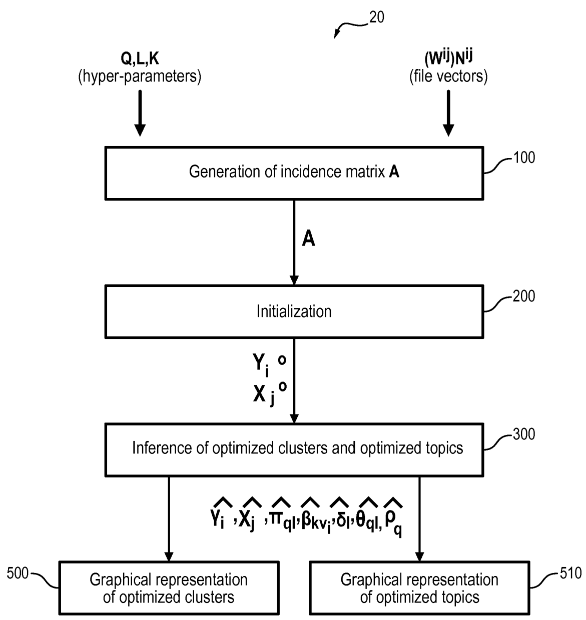


EP 3 591 545 A1

## Description

### Field of the invention and prior art

The present invention pertains to the field of automated analysis of computerized datasets, in a purpose of simultaneously classifying the first statistical individuals (senders) who produced the data, and the second statistical individuals (receivers) which the data relate to, into clusters. In particular, the invention is directed to a method, a system, and a computer program product for performing automated co-clustering of senders and receivers.

The digitalization of many activities has led to the generation and processing of massive sets of files, including text data and image data. The information contained in such massive datasets is commonly summarized in matrices of very high dimension, both in terms of rows and columns. Often, the files of the datasets are the result of interactions between "senders" which identify a source of the data of the files, the senders usually corresponding each to an individual such as a customer or a doctor, and "receivers", such as products or places which the customers post reviews about on a website, or patients whom digital medical information written by doctors towards.

In order to provide a synthetic view of information contained in the data and reduce the dimension of the data in terms of senders and receivers, clustering and co-clustering methods are commonly used.

In the case of interactions between senders and receivers, a set of files can be represented as an incidence matrix, the rows i thereof corresponding to each of the senders who produced files, and the columns j thereof corresponding to each of the receivers of the files. The task of simultaneously clustering rows and columns of such matrix $A = (A_{ij})$, in order to generate clusters of senders and clusters of receivers, can be referred to as a "co-clustering" task.

In the statistics and machine learning technical fields, existing methods for co-clustering the rows and the columns of such incidence matrix correspond either to deterministic approaches (such as the methods disclosed in *George and Merugu (2005)*[1], *Banerjee et al. (2007)*[2] or Wang and *Huang (2017)*[3]) or model-based approaches.

One of the most widely used model-based methods for co-clustering of rows and columns of an incidence matrix is based on the Latent Block Model (shortened as LBM). This model is described in *Govaert and Nadif (2003)*[4], with the main hypothesis being that the rows and the colums belong to hidden "latent" groups, or "clusters". This model is based on the assumption that the probability that the entry $A_{ij}$ of the matrix is non-null only depends on the respective clusters of sender i and receiver j. The clusters of senders and the clusters of receivers correspond to hidden groups which can be inferred, by an algorithm of statistical inference. The existing methods mainly use the probabilities that the entries of the incidence matrix are non-null, as the parameters for statistical inference. In other words, the criterion for clustering senders, or receivers, together is mainly based on the structure of the incidence matrix A - considering only the binary information of whether there is at least a file having i as an author and j as a receiver (non-null entry $A_{ij}$ if yes, null entry $A_{ij}$ if no). Variants of the initial LBM model exist, with weighted entries accounting for numerical data of the files (see *Govaert and Nadif (2010)*[5]), temporal data such as the date of generation of the content of the files, categorical data (depending on one of several types of files, see *Keribin et al. (2015)*[6]), or ordinal data (see *Jacques and Biernacki (2017)*[7]).

Various inference procedures are known to discover the clusters corresponding to a set of files in order to classify the senders and receivers, starting from the hypothesis that the files have been generated following an LBM model.

However, the known inference procedures do not involve proper text or image analysis of the data contained in the files. In particular, the semantic of said data is not considered in the existing methods, while clustering the senders together on the one hand, and the receivers together on the other hand.

Yet, for many types of sets of data, there is an interest that the inferred groups of senders and receivers be also dependent on the elements used in the text or image data. By "elements" of the data in a file, it is referred to automatically detectable units of the data. For a text, an element can correspond to a word; for an image, an element can correspond to a visual word of the image.

In the illustrative example of reviews of a web marketplace, a same set of customers (senders) who tend to post reviews about the same receivers may contain several clusters of customers, each cluster using semantically distinct elements about the same receivers. For instance, a first cluster may use favorable elements towards the receivers, and a second cluster may use more unfavorable elements towards the receivers. "Favorable elements" and "unfavorable elements" do not merely correspond to a cognitive distinction, because groups of elements (for example in the form of lists of elements) which are semantically similar ("favorable" or "unfavorable" here) can be determined. The existing methods based on Latent Block Model cannot distinguish the two aforementioned clusters of customers.

### Invention

A new perspective for improving co-clustering, in view of the above, is to include, in an algorithm of statistical inference of a generative model of documents generated by senders towards receivers, a criterion of co-occurrence of semantically similar elements in the data.

With this new perspective, the need arises for a co-clustering method which would modify the co-clustering of senders and receivers provided for instance by an inference of an LBM model, based on the co-occurrence of semantically similar elements in the files produced by senders of a same cluster about receivers of a same cluster.
There is an additional need for a method operable for files containing both text data and/or image data.

There is an additional need for a method which is operable without a strong hypothesis on the number of clusters of senders or the number of clusters of receivers.
There is an additional need for a method producing highly interpretable results in the form of human-readable representations of the inferred cluster structure, and which is able to operate with sufficient speed on massive datasets.

The present invention addresses the needs above by providing, in a first aspect, a computer-implemented co-clustering method, in which a set of digital files of a numerical information system, produced by senders towards receivers different from the senders, is processed, each file corresponding to images and/or text data,
each file of the i-th sender towards the j-th receiver corresponding to a file vector $w^{ij} = (W^{ij}_n)$, with $W^{ij}_n$ the n-th element of the file vector and $N^{ij}$ the number of elements of $W^{ij}$, wherein an element is a distinguishable unit of digital text data or digital image data contained in said file,
wherein said method achieves automated co-clustering of the receivers and of the senders, based on topics of the elements in the file vectors, wherein the method comprises the following steps:
construction of an incidence matrix $A = (A_{ij})$,
each of the rows i of the incidence matrix A corresponding to one of the senders, with M the number of senders, and each of the columns j of the incidence matrix A corresponding to one of the receivers, with D the number of receivers, the value of an entry $A_{ij}$ being non-null only if there is one file vector $w^{ij} = (W^{ij}_n)$ produced by sender i towards receiver j in the set of files, initialization through calculating a first estimated row clustering $Y=(Y_1, Y_2,...,Y_M)$ of the rows i of the incidence matrix A with a predetermined number Q of row clusters, and calculating a first estimated column clustering $X=(X_1, X_2,...,X_D)$ of the columns j of the incidence matrix A with a predetermined number L of column clusters,
inference of a generative model, each entry $A_{ij}$ of the incidence matrix A being modeled according to a Latent Block Model, and each file vector $W^{ij}$ being modeled according to a generative model of file vectors,
wherein the third step comprises calculating, on the basis of the estimated row clustering Y and the estimated column clustering X, updated topics k between the row clusters and the column clusters, wherein a topic k is a set of elements which co-occur most frequently in the file vectors between a row cluster and a column cluster, and, on the basis of a statistical criterion which is a function of proportions of at least some of the updated topics in the file vectors produced by senders of a same row cluster i of the estimated row clustering Y towards receivers of a same column cluster j of the estimated column clustering X, and updating the estimated row clustering Y and the estimated column clustering Y,
a fourth step in which the third step is repeated, on the basis of the new estimated clusterings Y and X calculated in sub-step, until a convergence criterion is fulfilled,
the method resulting in final topics k, a final row clustering Y and a final column clustering X being a function of the co-occurrence of elements belonging to the same topics in the file vectors produced by senders.

A first advantage of the above method is that the co-clustering of senders and receivers is greatly improved with respect to the co-clustering methods of the prior art, because the clusters of senders and receivers are a function of the topics of the elements of the data contained in the digital files (said topics allowing an efficient semantic classification of the content of the files). This co-clustering method outputs clusters such that two files produced by senders of a same cluster about receivers of a same cluster have a greater probability of containing elements belonging to the same topics than any two files of the input set of digital files.
The obtained partition of senders and receivers, i.e. the row clusters and column clusters, is therefore meaningful with regard to both the incidence matrix and the semantic of the content (corresponding to the topics k).

Thus, the co-clustering method of the invention displays a higher level of precision and interpretability than existing co-clustering methods.
A second advantage is that this co-clustering method can be used for both text data and image data in the content of the digital files taken as input, efficiently inferring clusters of senders and clusters of receivers on the basis of semantic content of both texts and images.

Said method can advantageously, and in a non-limiting manner, be completed by the additional features defined in claims 2 to 20, taken alone or in any technically feasible combination.

The present invention relates, according to a second aspect, to a data processing unit which is configured to execute the steps of a method as defined above, the data processing unit comprising:

- a first data processing sub-unit which is configured to receive a set of files produced by senders i relating to receivers j, and generate an incidence matrix on the basis of the files,
- a second data processing sub-unit which is configured to calculate a first estimated row clustering Y of the senders i, and a first estimated column clustering X of the receivers j,
- a third data processing sub-unit which is configured to determine topics in accordance with a generative model of file vectors,

and which is also configured to calculate proportions $\delta_l$ and $\rho_q$ and calculate probabilities $\theta_{ql}$, $\beta_{kv}$ and $\Pi_{ql}$ on the basis of a current estimated row clustering and a current estimated column clustering,

a fourth data processing sub-unit which is configured to calculate new estimated row clusters and new estimated column clusters on the basis of determined topics, calculated proportions $\delta_l$ and $\rho_q$ and calculated probabilities $\theta_{ql}$, $\beta_{kv}$ and $\Pi_{ql}$, by maximizing a statistical criterion,

and, optionally, a display unit which is configured to display a visual representation of estimated row clusters and estimated column clusters and/or lists of words or visual words corresponding to estimated topics.

According to a third aspect, the invention concerns a computer program product comprising code instructions which, when the program is executed by a processing unit, cause the processing unit to execute the steps of a method as defined above.

**General description of the drawings**

Other features, objectives and advantages of the invention will appear from the following detailed description, which is solely illustrative and non-limiting, which is to be read in correspondence with the following annexed drawings.

**Figure 1** represents the LTBM generative model in the form of a "plate notation".

**Figure 2** schematically represents a system for co-clustering senders and receivers associated with a set of files.

**Figure 3** schematically represents steps of an embodiment of a method for co-clustering of senders and receivers of an incidence matrix associated with a set of file vectors.

**Figure 4** schematically represents the initialization step of the method of Figure 3 in an embodiment.

**Figure 5** schematically represents the iterative inference steps of the method of Figure 3 in an embodiment.

**Figure 6** schematically represents a particular embodiment of a co-clustering method, wherein some file vectors contain text data.

**Figures 7a, 7b** and **7c** are graphical representations of the result of a co-clustering method applied to respectively first, second and third examples of sets of file vectors.

**Figure 8a,** which corresponds to the exemplary set of file vectors of Figure 7c, displays the evolution of the value of the lower bound used for inference of the parameters, over the iterations of the lower bound calculation.

**Figure 8b,** which also corresponds to the exemplary set of file vectors of Figure 7c, is a graphical representation of an incidence matrix which is ordered according to the final row clustering and final column clustering obtained as a result of the co-clustering method of Figure 6.

**Figure 9** schematically represents steps of an embodiment of a method for finding the best-fit parameters when inferring a LTBM model.

**Figure 10** represents a matrix of quality evaluation of several sets of hyper-parameters, for the exemplary set of file vectors of Figure 7c.

**Figure 11** is a list of major words of each topic obtained as a result of the co-clustering method of Figure 6, for an alternate exemplary set of text data.

**Figure 12** schematically represents a particular embodiment of a co-clustering method, wherein some file vectors are images.

**Figure 13** represents a visual word identification step of the method of Figure 12, for an exemplary image of a bike.

**Figure 14** represents a visual word pre-processing step of the method of Figure 12, for the bike image represented in Figure 13.

**Figure 15** is an exemplary list of major visual words and/or words of topics found as a result of co-clustering for a set of file vectors containing both images and text data.

**Detailed description of embodiments of the invention**

The description below relates to a system and a method for co-clustering senders and receivers relying on an innovative statistical model, referred to below as the Latent Topic-Block Model, shortened as LTBM.
Firstly, the principles, hypotheses and parameters of said model, which is a generative model of the digital files taken as an input of the co-clustering method, is explained below.
Secondly, an exemplary system and several embodiments of methods using said statistical model is described, with reference to the annexed drawings. The method for co-clustering described below performs statistical inference of the latent cluster structure in a digital set of files containing image and/or text data, the inference being performed on the basis of observed information from the digital set of files.

***Introduction of the LTBM generative model***

For the explanation of the LTBM generative model of digital files, we consider a set W of digital files. The definition of the digital files which is hereby provided also applies for the description below of a system and a method of the invention.
Each file corresponds to a file vector $W^{ij} = (W^{ij})_n$, with $W^{ij}{}_n$ the n-th element of said file vector and $N^{ij}$ the number of elements of $W^{ij}$, wherein an element is a distinguishable unit of digital text data or digital image data contained in said file. The set W is, for instance, a vector of the file vectors $W^{ij}$.
The digital files may be digital images, comments, reviews, messages, articles, texts, which are loaded on websites or in a software, and which are registered in a database. For example, a given text file $W^{ij}$, registered in text format in a database, may comprise a list of $N^{ij}$ words, each word counting (prior to pre-processing) as an element.
Each of the digital files is produced by one sender. By "sender" we mean an identifier of a source of the content of the digital file. It may typically be a name of a physical or legal person, or any other identifier of a person, or any other information that is unequivocally associated with a source, such as an email address or a website user profile name.
Alternatively, one or several of the digital files may have more than one sender.
Besides, each of the digital files is directed towards one receiver. By "receiver" we mean an object that the content of the digital file is classified, for example in a database, as relating to. The receiver may typically be a name of any object such as a physical or legal person, a product, a place, or any other information that is unequivocally associated with an object, such as a product reference. By "towards" we mean that the file is associated in a database with said receiver.
The receivers are different from the senders. For example, even if one person is both a producer of data and an object of some of the content, we consider a receiver that is distinct from the sender.
Alternatively, one or several of the digital files may have more than one receiver.

• *Modeling of connections*

The set W of digital files corresponds to an incidence matrix A. The incidence matrix A comprises connections between senders indexed by i and receivers indexed by j. The existence of a connection between sender i and receiver j in matrix A means that there is at least one digital file $W^{ij}$ in the set W, i.e. the sender i produced at least one file of set W towards the receiver j. The existence of such connection between sender i and receiver j corresponds preferentially to the value of term $A_{ij}$ being equal to 1. All terms $A_{ij}$, with sender i and receiver j not being connected, preferentially have a value equal to 0. We assume that there is a number M of senders and a number D of receivers.
The connections are modeled as follows. Similar to the LBM (Latent Block Model), a starting hypothesis is that the rows of A (i.e. the senders i) are grouped into a predetermined number Q of latent row clusters (which are also referred to in all the following as "sender clusters"). Said clusters are latent, in that they cannot be obtained directly without calculation when considering the set W of documents. A hidden vector $Y = (Y_1, ..., Y_M)$ is introduced, such that $Y_i = q$ if and only if the i-th row belongs to the q-th row cluster, with q ranging from 1 to Q.
Preferably, it is assumed that $Y_i$ is a variable which follows a multinomial distribution $M (1, \rho = (\rho_1, ..., \rho_Q))$ wherein $\rho$ is a parameter vector of said multinomial distribution. Each term of $\rho$ is different from 0 and the sum of said terms is equal to 1.
Similarly, another starting hypothesis is that the columns of A (i.e. the receivers j) are grouped into a predetermined number L of latent column clusters (which are also referred to in all the following as "receiver clusters"). A hidden vector $X = (X_1, ..., X_D)$ is introduced, such that $X_j = l$ if and only if the j-th column belongs to the l-th row cluster, with l ranging from 1 to L.
Preferably, it is assumed that $X_j$ is a variable which follows a multinomial distribution $M (1, \delta = (\delta_1, ..., \delta_L))$ wherein 5 is a parameter vector of said multinomial distribution. Each term of 5 is different from 0 and the sum of said terms is equal to 1.

The label vectors Y and X are assumed to be independent. An equivalent "0-1 notation" can be employed such that $Y_i$ = q (respectively ($X_j$ = l) if the i-th row belongs to the q-th row cluster (respectively, if the j-th column belongs to the l-th column cluster), and equal to 0 otherwise.

As for the value of the terms $A_{ij}$, i.e. the existence of a connection between sender i and receiver j, the LTBM model assumes that the probability of such connection (i.e. that $A_{ij}$ = 1) only depends on the row cluster of sender i and the column cluster of receiver j.

Conditionally on Y and X, $A_{ij}$ is preferably assumed to be a random variable following a Bernoulli distribution:

$$p(A_{ij}|X_{iq}Y_{jl}=1)=\mathcal{B}(A_{ij};\pi_{ql}):=\pi_{ql}^{A_{ij}}(1-\pi_{ql})^{1-A_{ij}}$$

In the equation above, a new parameter $\pi_{ql}$ is introduced. $\Pi$ is a matrix of probability that a sender of each row cluster produces a document towards a receiver of each column cluster. $\Pi$ is therefore a matrix of connection probabilities between row clusters and column clusters.

The entries of incidence matrix A are all assumed to be independent conditionally on Y and X:

$$\begin{aligned} p(A|Y,X,\pi) &= \prod_{i=1}^{M}\prod_{j=1}^{D} p(A_{ij}|Y_i,X_j,\pi) \\ &= \prod_{i=1}^{M}\prod_{j=1}^{D}\left(\prod_{q=1}^{Q}\prod_{l=1}^{L}\left(\mathcal{B}(A_{ij},\pi_{ql})\right)^{Y_{iq}X_{jl}}\right) \end{aligned}$$

• *Modeling of file vectors*

The LTBM not only comprises a statistical modeling of the connections between senders and receivers as set forth above, but also a generative model of the elements of the file vectors $W^{ij}$. This is an important distinctive feature of the LTBM model with regards to existing models reliant on the LBM.

Independently from the analysis of datasets comprising documents generated by senders towards receivers, statistical modelling methods exist to detect term frequency within a document text, taking into account synonymy and polysemy. Latent Dirichlet allocation (LDA) is a known generative model of documents, disclosed in *Blei et al. (2003)*[8]. The idea of the LDA model is that documents are represented as random mixtures over latent topics, wherein each topic is a latent group of words which have similar semantic content. Since the semantic of words of a same topic is similar, it is assumed that the words of a same topic will more often appear together in the documents than any two random words. Thus, a topic can also be defined as a set of words which co-occur frequently (i.e. which are frequently used together in a same document). The theme of the topic is chosen by the user of the invention who defines it in regard to the list of words which co-occur between a cluster of senders and a cluster of receivers.

Another hypothesis of LDA is that different words in the same document can be generated from different topics with different proportions, and that the topic distribution over words has a Dirichlet statistical distribution in the LDA model.It is also important to note that the co-clustering method hereby described does not perform a co-clustering of rows and columns of a document-term matrix; senders and receivers are co-clustered. Some known models account for co-clustering of documents on the one hand, and the words contained in said documents on the other hand. For example, publication *Wang et al. (2009)*[9] uses a Bayesian Framework to simultaneously cluster documents and words of a document-term matrix. However, to the knowledge of the Applicants, no known method uses the hypothesis that the content of files is generated according to a LDA generative model, in order to perform a more accurate co-clustering of senders and receivers of said files.

The generative model of file vectors which will be described below extends the hypothesis that words of a document belong to latent topics to the context of co-clustering of senders and receivers corresponding to a computerized set of digital files.

However, a main distinction between the LDA model and the LTBM model is that, in the LTBM model, the topic proportions of the words of a given file vector only depend on the row cluster of the sender and the column cluster of the receiver, as is apparent from the equations below.

Each file of set W corresponds to a file vector $W^{ij} = (W^{ij}_n)$. A random variable $Z^{ij}_n$, also referred to as a "topic label", is introduced, associated with the element $W^{ij}_n$, such that $Z^{ij}_n$ = k if the word $W^{ij}_n$ is extracted from the k-th topic. It is assumed that there is a predetermined number K of topics throughout the whole set W of digital files.
Then, conditional on $Y_i$ and $X_j$ (i.e. on the respective clusters of the sender and the receiver), the variable $Z^{ij}_n$ follows a multinomial distribution based on parameter vector $\theta_{ql}$, wherein said vector $\theta$ is a vector of topic proportions of the words of digital files produced by a sender of row cluster q towards a receiver of column cluster l:

$$Z_n^{ij}|\{Y_{iq}X_{jl}=1\} \sim \mathcal{M}\left(1, \theta_{ql}=(\theta_{ql1},\ldots,\theta_{qlK})\right)$$

Moreover, conditionally on $X_i$, $Y_j$ and $\theta$, the random variables ($Z_{ij}^1$, ..., $Z_{ij}^{Nij}$) are all assumed to be independent, hence:

$$\begin{aligned} p(Z|A,Y,X,\theta) &= \prod_{i=1}^{M}\prod_{j=1}^{D} p\left(Z^{ij}|Y_i,X_j,\theta\right)^{A_{ij}} \\ &= \prod_{i=1}^{M}\prod_{j=1}^{D}\left(\prod_{q=1}^{Q}\prod_{l=1}^{L} p\left(Z^{ij}|\theta_{ql}\right)^{Y_{iq}X_{jl}}\right)^{A_{ij}} \\ &= \prod_{i=1}^{M}\prod_{j=1}^{D}\left(\prod_{q=1}^{Q}\prod_{l=1}^{L}\left(\prod_{n=1}^{N^{ij}}\prod_{k=1}^{K}\theta_{qlk}^{Z_{nk}^{ij}}\right)^{Y_{iq}X_{jl}}\right)^{A_{ij}} \end{aligned}$$

where $Z^{ij} := (Z_1^{ij},\ldots,Z_{N^{ij}}^{ij})$ and $Z := \{Z^{ij}\}_{i,j}$.

Preferably, the vectors of topic proportions $\theta_{ql}$ are themselves random vectors drawn from a Dirichlet distribution:

$$\theta_{ql} \sim \mathcal{D}(\alpha=(\alpha_1,\ldots,\alpha_K))$$

wherein $\alpha = (\alpha_1, ..., \alpha_K)$ is a vector of parameters of the Dirichlet distribution of topic proportions.

Besides, once $Z_{ij}^n$ is set, i.e. knowing which topic k the element (word or image) $W_{ij}^n$ is drawn from, the element $W_{ij}^n$ is preferably assumed to be drawn from a multinomial distribution as follows:

$$W_n^{ij}|Z_{nk}^{ij}=1 \sim \mathcal{M}(1,\beta_k=(\beta_{k1},\ldots,\beta_{kV}))$$

The vector $\beta_k$ is associated with the topic k. Said vector corresponds to the probability that each element (indexed by v) of a vocabulary V is used in relation with topic k. For example, the vocabulary V can be made of the list of all elements of the set W of digital files. In other words, the elements that appear in the dictionary are the same as the elements $W^{ij}_n$ included in the file vectors, only re-indexed differently according to the index v. Each term of the vector $\beta_k$ is greater than 0 and the sum of all terms of said vector is equal to 1.
It is to be noted that the vectors $\beta_k$ depend neither on the row clusters nor on the column clusters. Said vectors represent the distribution of elements of the file vectors between the latent topics k.

As a result of the above, the full joint distribution for the text part of the LTBM model of the digital files is obtained as follows:

$$p(W,Z,\theta|A,Y,X,\beta)=p(W|Z,A,\beta)p(Z|A,Y,X,\theta)p(\theta)$$

wherein the distribution for the random variable Z is provided above, the distribution for the vectors θ of topic proportions is drawn from a standard Dirichlet distribution, and the distribution for the latent variable W of the elements of the files is as follows:

$$p(W|Z,A,\beta) = \prod_{i=1}^{M}\prod_{j=1}^{D} p\left(W^{ij}|Z^{ij},\beta\right)^{A_{ij}}$$

$$= \prod_{i=1}^{M}\prod_{j=1}^{D}\left(\prod_{n=1}^{N^{ij}} p\left(W_n^{ij}|Z_n^{ij},\beta\right)\right)^{A_{ij}}$$

$$= \prod_{i=1}^{M}\prod_{j=1}^{D}\left(\prod_{n=1}^{N^{ij}}\prod_{k=1}^{K}\left(\prod_{v=1}^{V}(\beta_{kv})^{W_{nv}^{ij}}\right)^{Z_{nk}^{ij}}\right)^{A_{ij}}$$

It can be mathematically proven that the joint distribution $p(W,Z,\theta|A,Y,X,\beta)$ is equal to the following mathematical expression:

$$\prod_{q=1}^{Q}\prod_{l=1}^{L} p\left(W^{ql}|Z^{ql},\beta\right) p\left(Z^{ql}|\theta_{ql}\right) p\left(\theta_{ql}\right)$$

In the above expression, the new notation $W^{ql}$ is introduced. $W^{ql}$ is an aggregate (also referred to as a "meta-document") of all the file vectors of the digital files having a sender belonging to row cluster q and a receiver belonging to column cluster l. The other new notation $Z^{ql}$ is also introduced above, corresponding to the set of all topic labels in the digital files having a sender belonging to row cluster q and a receiver belonging to column cluster l.
Thus, if the row clustering Y and the column clustering X are fixed, the abovementioned joint distribution is similar to the distribution of an LDA model with a number Q x L of aggregates $W^{ql}$, the topic distribution of which are mutually independent. Indeed, the topic distribution of each aggregate $W^{ql}$ is defined by the vector $\theta^{ql}$ of topic proportions.

As a result of all the above, the main underlying hypotheses of the LTBM generative model of digital files are as follows:

- The existence or absence of a digital file produced by sender i towards receiver j is only a function of the two clusters which the sender i and the receiver j respectively belong to.

- The semantic of elements (text data and/or image data) of a given digital file produced by sender i towards receiver j is also only a function of the two clusters which the sender and the receiver respectively belong to. By "semantic of elements", we refer to a semantic classification of the elements of the digital files among topics k. The construction of the topics is detailed below.

In other words, according to the LTBM model of digital files, two senders assigned to the same latent sender cluster should not only have the same propensity to produce files towards each of the receiver clusters, but also have a propensity to use elements (words and/or images) related to similar topics.

The LTBM model is built such that, if we suppose that the latent clusters of the rows and the columns are known, and if "aggregates" of the files as defined are considered - each aggregate being formed by the set of all files produced by senders of a same row cluster towards receivers of a same column cluster - then the generative model of one given aggregate corresponds to the LDA generative model.

A graphical representation of the Latent Topic-Block Model (LTBM) described above is given in **Figure 1,**

following a standard "plate notation" as commonly used in statistical analysis. The large circles with a white background correspond to the variables of the statistical model, whereas the smaller circles in black correspond to the parameters of the model as described above. The arrows do not serve to link a reference sign to its object, but rather to indicate a dependency of a variable of the model from another variable or parameter. The observed variables of the model correspond to the incidence matrix A and the file vectors $W^{ij}$. All other variables are unobserved.
Dependencies of an observed or unobserved variable of Figure 2 from another variable are shown by a directed arrow: the variable located on the side of the point of the arrow depends from the variable or parameter located on the other side of the arrow. Mathematical expressions of the variables, including said dependencies, are described above.
An aim of the method for co-clustering which will be described hereafter is to obtain optimized and topic-meaningful row clusters Y an column clusters X. The method also determines latent topic vectors $Z^{ij}$, optimized vectors of topic proportions $\theta^*$, and the following parameters of the LTBM model of digital files taken as an input: the matrix n of probabilities of existence of files from a sender of each sender cluster towards a receiver of each receiver cluster, the vector $\delta$ of proportions of row clusters $\hat{Y}$, the vector $\rho$ of proportions of column clusters X.

***<u>System for co-clustering senders and receivers</u>***

A system for automated co-clustering of senders and receivers, said senders and receivers being identifiable from a set of digital files, is illustrated in **Figure 2.**
Said system comprises a data processing unit 10, preferably a server comprising a processor or a group of servers. The data processing unit 10 of Figure 2 includes:

- a first data processing sub-unit which is configured to receive a set of files produced by senders i relating to receivers j, and to generate an incidence matrix A. Said first sub-unit either has access to a memory of the data processing unit 10, wherein the file vectors $W^{ij}$ are saved, or receives the set W of digital files from a database of an external numerical information system 12. The processing unit 10 and the information system 12 are preferably configured to communicate over a remote communications network, such as the Internet;
- a second data processing sub-unit which is configured to calculate a first estimated row clustering Y of the senders i, and a first estimated column clustering X of the receivers j, as described hereafter;
- a third data processing sub-unit which is configured to determine topics k in accordance with the LTBM generative model of file vectors, as described hereafter, and which is also configured to calculate proportions $\delta_l$ and $\rho_q$ and calculate probabilities $\theta_{ql}$ , $\beta_{kv}$ and $\Pi_{ql}$ on the basis of a current estimated row clustering and a current estimated column clustering;
- a fourth data processing sub-unit which is configured to calculate new estimated row clusters and new estimated column clusters on the basis of determined topics, calculated proportions $\delta_l$ and $\rho_q$ and calculated probabilities $\theta_{ql}$, $\beta_{kv}$ and $\Pi_{ql}$, by maximizing a statistical criterion, for example by maximizing the lower bound function which is described hereafter.

Any of the first, second, third and fourth sub-units can correspond to the same unit, or to distinct units.
The system for co-clustering optionally comprises a display unit 11 which is configured to display a visual representation of estimated row clusters and estimated column clusters and/or lists of words or visual words corresponding to estimated topics, as described hereafter. A connection between the processing unit 10 and the graphical interface 11 is preferably hardwired.
The processing unit 10 also preferably comprises a software core which is configured to execute code instructions to implement the method described below, and one or several plugins allowing one of: the visualization of the output data and/or the input data on a graphical interface of the display unit 11, the import and/or the pre-processing of the input digital files, the export of the results of the co-clustering method.

***<u>Co-clustering method - Inference of the LTBM generative model</u>***

The annexed **Figure 3** is a schematic general view of a co-clustering method 20 according to a preferred embodiment of the invention. This method can be executed by the data processing unit 10 of the system represented in Figure 2.
In all the following, reference is made to the same notations defined above when introducing the LTBM model, in particular the notations for the variables and parameters of the model. Indeed, the calculation steps 200 and 300 described below correspond to inference of a latent row clustering X, a latent column clustering Y and latent topics k of an LTBM model of the file vectors of a set of digital files, said set being taken as an input. Thus, the mathematical relationships and statistical modelling introduced above in relation to LTBM apply in all the following.
Method 20 takes the following data as an input:

- File vectors $W^{ij} = (W^{ij})_n$ as defined above, corresponding to the digital files of the set W; we remind that the digital files may be digital images, comments, reviews, messages, articles, texts, which are loaded on websites or in a software. Said files are registered in a numerical information system (hereafter "the database"), which is either a database of the data processing unit 10 or a database of the external numerical information system 12. Each file vector $W^{ij}$ comprises $N^{ij}$ elements (words and/or images or sub-images);
- Predetermined values of the parameters Q (number of row clusters), L (number of column clusters) and K (number of topics), all three parameters being referred to as "hyper-parameters".

Besides, the Dirichlet parameter $\alpha$ is also considered fixed and it is not inferred during method 20. For example, the value of all terms of the vector $\alpha$ is set to 1, corresponding to a uniform distribution over the (K - 1) simplex of all topic proportion vectors $\theta_{ql}$.
For example, in the field of healthcare, the digital files can be texts written by a doctor towards one or several patients. In the field e-commerce, the set of digital files can be a set of comments produced and posted by customers (each customer being associated with a customer profile) towards one or several products on sale on a website.

More generally, the senders can be one of: authors, customers, companies, messaging accounts, website accounts, bank accounts, healthcare practitioners, magazines, and the receivers j can be one of: groups of articles, places, groups of messages, websites, patients, medicines, technical fields.

In all the following, the final values of the variables and parameters are noted with a circumflex. For example, the final value of the row clustering Y is noted $\hat{Y}$.

Method 20 comprises a first step of generation 100 of an incidence matrix A, on the basis of the set W of file vectors.
The structure of the incidence matrix A is defined above. The processing unit 10 identifies, from information of the database, or automatically identifies, the senders and the receivers of each of the files of the set W. Thus, the incidence matrix A is built with $A_{ij} = 1$ if and only if a file vector produced by sender i towards receiver j exists in the set W.

Alternatively, the set W of digital files may already be "organized" prior to running the method 20, i.e. a predetermined incidence matrix A may be registered in the database. In this case, step 100 is not necessary.

• *General principle of inference*

The principles for inference of the LTBM model, for the file vectors of the set W, are now described, both for the initialization step 200 and the ulterior inference step 300.
The full probabilistic joint distribution for the whole LTBM model of the file vectors is noted as $p(W,Z,\theta,A,Y,X|\pi,\rho,\delta,\beta)$.
In method 20, an iterative VEM (Variational Expectation-Maximization) method is used for inference. The general principles of a VEM algorithm are known to the man skilled in the art and will not be provided here. An iteration of the VEM algorithm comprises alternating several times between a sub-step of calculation of an expectation function, and a sub-step of maximization of said function. The expectation function corresponds to the log-likelihood evaluated for current values of the parameters.
The data log-likelihood for LTBM is as follows:

$$\log p(W,Z,\theta,A,Y,X|\pi,\rho,\delta,\beta) = \log p(W,Z,\theta|A,Y,X,\beta) + \log p(A,Y,X|\pi,\rho,\delta)$$

The LTBM data log-likelihood is therefore the sum of a text-based complete data log-likelihood on the left side of the addition, and an incidence-based complete data log-likelihood on the right side.

A variational decomposition of log $p(W|A,Y,X,\beta)$ using any distribution $q(Z,\theta)$ over the pair $(Z,\theta)$ can be used. It can be mathematically proven that this term is the sum of a Kullback-Leibler divergence and a lower

$$\begin{aligned}\mathcal{L}(q(\cdot)|A,Y,X,\beta) &:= \int_\theta \sum_Z q(Z,\theta) \log \frac{p(W,Z,\theta|A,Y,X,\beta)}{q(Z,\theta)} \mathrm{d}\theta \\ &= \mathbb{E}_q\left[\log \frac{p(W,Z,\theta|A,Y,X,\beta)}{q(Z,\theta)}\right],\end{aligned}$$

bound (i.e. a value which is always lower than the minimum) for the integrated log-likelihood log $p(W|A,Y,X,\beta)$. Said lower bound is defined as follows:

When implementing the VEM algorithm, the data log-likelihood log p(W|A,Y,X,β) corresponding to the text/image data is replaced by said lower bound L.
Going back to the data log-likelihood for the whole LTBM model, the value of said data log-likelihood over the variables W, A, Y and X is always higher than the following value:

$$\mathcal{L}(q(\cdot)|A, Y, X, \beta) + \log p(A, Y, X|\pi, \rho, \delta)$$

The general idea of the determination of the topics, during steps 200 and 300, is to maximize said value, which is a sum of the lower bound L and the data log-likelihood over the variables A, Y and X. Said value is therefore used as a statistical criterion for determination of best-fit parameters of the LTBM model of the file vectors of set W.
The maximization of said value is done by alternatively going through sub-steps (a) and (b) which consist in carrying out a VEM algorithm to alternatively maximize the statistical criterion with respect to the distribution q(Z,θ) (expectation step) and with respect to the model parameters π, ρ, δ and θ (with the row clustering Y and the column clustering X being fixed).

For the expectation step of the VEM algorithm, it can be mathematically proven that the update step for distribution $q(Z^{ij}_n)$ is as follows:

$$q(Z_n^{ij}) = \mathcal{M}(Z_n^{ij}; 1, \phi_n^{ij} = (\phi_{n1}^{ij}, \ldots, \phi_{nK}^{ij}))$$

*where*

$$\phi_{nk}^{ij} \propto \left(\prod_{v=1}^{V} \beta_{kv}^{W_{nv}^{ij}}\right) \prod_{q=1}^{Q} \prod_{l=1}^{L} \exp\left(\psi(\gamma_{qlk}) - \psi(\sum_{k'=1}^{K} \gamma_{qlk'})\right)^{Y_{iq}X_{jl}}$$

Besides, it can be mathematically proven that the update step for distribution q(θ) is as follows:

$$q(\theta) = \prod_{q=1}^{Q} \prod_{l=1}^{L} \mathrm{Dir}(\theta_{ql}; \gamma_{ql} = (\gamma_{ql1}, \ldots, \gamma_{qlK}))$$

*where*

$$\gamma_{qlk} = \alpha_k + \sum_{i=1}^{M} \sum_{j=1}^{D} \sum_{n=1}^{N^{ij}} A_{ij} X_{iq} Y_{jl} \phi_{nk}^{ij}, \qquad \forall (q, l).$$

Finally, for the maximization step of the VEM algorithm, the estimates of the parameters of the LTBM model are as follows:

$$\beta_{kv} \propto \sum_{j=1}^{M} \sum_{j=1}^{D} \sum_{n=1}^{N^{ij}} A_{ij} W_{nv}^{ij} \phi_{nk}^{ij}, \qquad \forall (k, v)$$

$$\pi_{ql} \propto \sum_{i=1}^{M} \sum_{j=1}^{D} Y_{iq} X_{jl} A_{ij}, \qquad \forall (q, l)$$

$$\rho_q \propto \sum_{i=1}^{M} Y_{iq}, \qquad \forall q,$$

$$\delta_l \propto \sum_{j=1}^{D} X_{jl}, \qquad \forall l,$$

• *Initialization*

In an initialization step 200 of method 20, an embodiment thereof is now described in relation with **Figure 4,** initial row cluster assignments $X_{iq}{}^0$ and initial column cluster assignments $Y_{jl}{}^0$ are calculated.

In all the following (either for initial clusters of step 200 or estimated clusters of ulterior step 300), row cluster assignments and column cluster assignments are stored in a memory of the processing unit 10, said storage in memory corresponding to a link between a sender or receiver number and a cluster number. Said memory preferably comprises an association table between senders and row clusters comprising a memory space for each sender i, and an association table between receivers and column clusters comprising a memory space for each receiver number j. The stored associations are to be updated during method 20.

Firstly, in an optional step 210, for each pair of a sender i and a receiver j for which $A_{ij}$ is not equal to 0, an aggregate $W^{*ij}$ is generated. Said aggregate is a concatenation of all file vectors having i as a sender and j as a receiver. Afterwards, in a step 220, a first iteration of the VEM algorithm is run over all aggregated documents $W^{*ij}$, in order to determine K initial topic vectors $\beta_k$. The index v corresponds to all the elements which are used in the whole set W of digital data, said elements making for a vocabulary comprising a total number V of elements. $\beta_{kv}$ is the probability that when producing elements associated with topic k, the element v is used. Alternatively, the vocabulary of all possible elements could be extended to any desired list of elements, for example all words of a dictionary. The purpose of step 220 is to determine elements which co-occur frequently throughout the set of aggregates $W^{*ij}$. Two elements are determined as co-occurring frequently if, when one of the two is present in an aggregate, the other is more likely to also be present in said aggregate. Thus, a given topic k obtained as a result of step 120 gathers elements which co-occur frequently.

The same definition of a topic k for the final topics obtained as one of the results of the whole method 20. If the list of elements corresponding to the topics k is eventually interpreted by a human reader, a possible assumption is that the elements which are gathered in a same topic indeed correspond to a single meaningful topic of discussion for said reader.

The outputs of step 220 are the initial topic vectors $\beta_k$ and initial vectors $\theta_{ij}$ of topic proportions (which do not correspond to any row clusters or column clusters). As a result, all elements of the aggregates are associated with at least one of the initial topics.

In a subsequent step 230, a topic matrix T of size M x D is determined. A value $T_{ij}$ of said topic matrix is set as equal to a predetermined value, chosen according to the majority topic k in the aggregate $W^{*ij}$. For example, the value of $T_{ij}$ can be instantiated as equal to the index k.

In a subsequent step 240, a similarity matrix S of size M x M is calculated, which is indexed by the senders i. For each pair of senders i1 and i2, term $S_{i1i2}$ is equal to the value of a similarity function which is a function of the number of files produced by senders i1 and i2 towards the same receivers using the same main topics.

In a preferred embodiment, $S_{i1i2}$ is determined as follows:

$$S_{i_1 i_2} = \sum_{j=1}^{D} A_{i_1 j} A_{i_2 j} \mathbf{1}_{\{T_{i_1 j} = T_{i_2 j}\}}$$

with $1_I$ denotes the indicator function on a set I.

As a final step 250 of the initialization 200, a first estimated row clustering $Y^0$ and a first estimated column clustering $X^0$ are determined, as a function of the similarity matrix. Preferably, a spectral clustering algorithm is used, based on the Laplacian graph associated with matrix S. An efficient spectral algorithm for step 250 is described in *Von Luxburg (2007)*[10].

An alternate strategy for initialization 200 is to choose several random row clusterings and several random column clusterings, and finally select, as the initial row clustering and the initial column clustering, the assignments which provide the highest value of the lower bound as defined above. Alternatively, an initialization strategy based on a k-means algorithm may be used.

The strategy for initialization described above, using a similarity matrix, is more advantageous than a mere selection of the initial clusters among random row clusters and column clusters, because there is a higher probability that the co-clustering obtained as a final result of the method 20 is the real optimum, and not a mere local optimum.

Going back to the co-clustering method 20 of Figure 3, the step of initialization is followed by a step of iterative inference 300 of optimized row clusters, column clusters and topics. The step 300 takes the first initial row clusters $Yi^0$ and the first initial column clusters $X_j^0$ as an input.

A preferred embodiment of the inference step 300 is schematically represented in **Figure 5.**

The inference is iterative, in that it is repeated until convergence of a criterion which is defined hereafter. Thus, the row clusters $Y_i$ and the column clusters $X_j$ are updated throughout the iterations, and new indices corresponding to updated cluster numbers are registered by the processing unit 10 in the dedicated memory spaces. The inference step 300 represented in Figure 5 corresponds to the (t+1)-th iteration, taking row clusters $Y_i^t$ and column clusters $X_j^t$, output from the t-th iteration of the sub-steps of step 300, as a result.

The step 300 of inference comprises a first step 310 of topic determination, comprising the maximization of the statistical criterion defined above, consisting of a sum of the lower bound L and the data log-likelihood over the variables A, Y and X of the LTBM model, by alternatively going through sub-steps (a) and (b) as defined above on one hand, and an additional sub-step (c) on the other hand.

Especially, the topic determination step 310 comprises a sub-step 311, corresponding to sub-step (a) above of maximization of the VEM algorithm, wherein, for each row cluster q and each column cluster l of respectively the estimated row clustering Y and estimated column clustering X, the proportion $\rho_q$ of the row cluster q among all row clusters, the proportion $\delta_l$ of the column cluster l among all column clusters, and the probability $\pi_{ql}$ that a sender of row cluster q produces a file vector towards a receiver of column cluster l, are calculated on the basis of row clusters $Y_i^t$ and column clusters $X_j^t$.

Step 310 also comprises sub-steps 312 and 313 corresponding to the computation of vectors $\theta_{ql}$ and $\beta_k$:

- probability vectors $\theta_{ql} = (\theta_{ql})_k$ of topic proportions for the elements of the file vector produced by a sender of row cluster q towards a receiver of column cluster l,
- vectors $\beta_k$ comprising, for each element v of the dictionary, the probability $\beta_{kv}$ of element v being used in relation to topic k.

The determination of probabilities $\theta_{ql}$ and $\beta_{kv}$ is done as a function of a criterion of co-occurrence of elements v in the file vectors.

More particularly, in a preferred embodiment, the sub-steps 312 and 313 are as follows:

- At step 312, for each row cluster q and each column cluster l, all the file vectors Wij produced by any sender i of row cluster q towards any receiver j of cluster l are aggregated, resulting in an aggregate $W^{*ql}$;
- At step 313, the co-occurrence of elements v among the aggregates $W^{*ql}$ is analyzed, in order to determine a (predetermined) number K of topics k.

The determination of the topics k corresponds to the determination of probabilities $\theta_{ql}$ and $\beta_{kv}$, with reference to the distribution $q(Z,\theta)$ of the random variable $Z^{ij}$. This determination corresponds to the expectation step of the VEM algorithm, comprising the update step for distribution $q(Z^{ij}{}_n)$ and the update step for distribution $q(\theta)$.

In a preferred embodiment, the sub-steps 312 and 313 are repeated a predetermined number of times, for example ten times.

The VEM algorithm which is run during the execution of step 310 is therefore similar to the algorithm described above, for step 220 of the preferred embodiment for initialization of method 20.

However, an important difference is that the topic determination is not done over aggregates $W^{*ij}$ (which do not depend on any row clusters or column clusters), but over aggregates $W^{*ql}$. The aggregates $W^{*ql}$ gathers the elements of the files produced by a sender of cluster q towards a receiver of cluster l.

Afterwards, once the topics k are updated, iteration (t+1) of the step 300 of inferences comprises a sub-step **(c)** of iteration which consists in carrying out a "greedy" search strategy, as commonly referred to in the field of statistical analysis; with fixed values of the model parameters $\pi$, $\rho$, $\alpha$ and $\beta$, the statistical criterion above is maximized with respect to the row clustering Y and the column clustering X.

This greedy search strategy for updating the row clusters and column clusters is executed by the data processing unit 10 during steps 320 and 321, taking as an input the updated values of the variables and parameters relating to the topics obtained as a result of step 310 of the (t+1)-th iteration.

At step 320, the row clusters are updated, row by row. The greedy search is carried out by calculating, for each sender i, the row clustering of sender i which provides the maximum value of the same statistical criterion defined above, which, for the record, is as follows:

$$\mathcal{L}(q(\cdot)|A, Y, X, \beta) + \log p(A, Y, X|\pi, \rho, \delta)$$

The other estimated row clusters of the other senders are temporarily fixed as well as the column clusters of the receivers, and sender i is assigned to the determined row cluster q in a new estimated row clustering Y. With q being the current cluster in which row i is clustered (i.e. $Y_i^t = q$), the algorithm looks for every possible label swap, i.e. removes i from cluster q and assigns it to a cluster r different from q.

The corresponding change in the statistical criterion is then computed. If no cluster swap for row i induces an increase in the value of the criterion, then the cluster assignment $Y_i$ remains unchanged and $Y_i^{t+1} = Y_i^t$.

Otherwise, the cluster swap for node i that yields maximal increase of the value of lower bound L is applied, and cluster assignment Yi is changed accordingly: for the cluster q that provides maximum value of L, $Yi_{(t+1)} = q$.

Then, the column clusters are updated column by column at step 321; for each receiver j, the greedy strategy similarly consists in calculating the column clustering of receiver j which provides the maximum value of the statistical criterion, the other estimated column clusters of the other receivers being fixed as well as the row clusters, and assigning the receiver j to the determined column cluster I in the new estimated column clustering X.

Steps 320 and 321 can, alternatively, be performed in reverse order, i.e. the column clusters can be updated prior to the row clusters.

After execution of said steps, updated row clusters $Y_i^{t+1}$ and updated column clusters $X_j^{t+1}$ are output.

Conversely to the topic determination step 310, the variables relating to the topics (i.e. θ, β, Z) are held fixed during steps 320 and 321. It is therefore the right-side member of the sum which is maximized during steps 330 and 331.

As a last step of the (t+1)-th iteration, test is then performed to assess whether a new iteration of the steps of inference 300 is necessary. A mathematical function, corresponding to a convergence criterion for the updated values of the row clusters, column clusters and vectors θ and β with respect to the values of the previous iteration, is calculated. In the present example, the convergence criterion depends on the absolute value of the difference between the lower bound value for the (t+1)-th iteration and the lower bound value for the t-th iteration.

If said absolute value is below a predetermined threshold, it is considered that the convergence criterion is fulfilled. For example, the predetermined threshold can be set to a value between 100 and 10 000.

The final row clustering $\hat{Y}$ and final column clustering $\hat{X}$ and the final topics k, as well as the final values of all other variables and parameters of the LTBM model, is set to the values obtained as a result of the (t+1)-th iteration of the inference step 300.

On the opposite, if said absolute value is above the threshold, it is considered that the co-clustering results can still be optimized, and the steps of inference 300 are executed again, taking the results of the (t+1)-th iteration as an input.

Because the proposed methodology for inference 300 requires a variational EM (VEM) approach, for topic determination, as well as a classification step for updating the row clusters and the column clusters, the overall inference algorithm is called classification VEM, or C-VEM.

Finally, going back to the method 20 of Figure 3, as an optional step, a graphical representation of inference results can be generated and shown on the display unit 11. The result can correspond to any form of graphical representation that allows for a human reader to understand some of the final variables and parameters obtained after inference of the LTBM model corresponding to the set W of files. In particular, a graphical representation of the optimized row clusters and column clusters can be generated at step 500, and/or a graphical representation of the optimized topics can be generated at step 510.

An advantage of showing a graphical representation of the column and row clusters is that the results are more easily interpretable than an association table between senders/receivers and clusters.

An advantage of showing a graphical representation of the topics is that a human reader can check whether the elements gathered together in the final topics do indeed correspond to semantically similar words and/or images.

In the following, two examples of implementation of method 20, using for instance the system of Figure 2, are provided. Example 1 corresponds to a set of files wherein the elements of the files are words, whereas the elements of the set of files of Example 2 are images or sub-images.

The set of files of Example 1 is used as an input of a particular embodiment of a co-clustering method, comprising additional steps for selection of best-fit hyper-parameters (Q*, L*, K*) of the LTBM model.

## Example 1: Co-clustering based on three synthetic sets of texts

• *Co-clustering method applied to the three datasets*

In Example 1, the elements of each file vector $W^{ij}$ corresponding to the set W are words. The dictionary is therefore made of a list of words v which are to be grouped in topics k during inference of the LTBM model, said list being stored in a memory of the processing unit.
Alternatively, the digital files of the set taken as an input are comments, reviews, messages or articles.

The steps of a particular embodiment of a co-clustering method are schematically represented in **Figure 6.** The method of said embodiment corresponds to the method 20 of Figure 3, with an added preliminary step 50 of pre-processing of the words v of the dictionary comprised in the topics. Said method is run, for instance, by the data processing unit 10 of Figure 2.

As an input of the method, three different datasets 1, 2 and 3 are built. Three different setups are simulated. In each setup, an individual i (sender) connects with an object j (receiver) either with a higher probability of 30% or with a lower probability of 5%. The probability assigned to each pair (i, j) only depends on their respective clusters, in compliance with the hypothesis of the LTBM model introduced above.

Once i and j are connected, a document (a digital file of set W) is sampled and associated with the connection. The words in each document are extracted from three texts (the words of one text correspond to one topic) from the website of a popular British newspaper. One text is about black holes in astrophysics (Topic A), the second is about the birth of Princess Charlotte (Topic B) and the third one focuses on UK politics (Topic C). The number of words in a document is drawn from a Poisson distribution of mean 50. The topic proportions in each text only depend on the respective clusters of the corresponding pair (i, j), in compliance with the hypothesis of the LTBM model introduced above.
The LTBM parameters (probabilities of connections as well as topic proportions) of the three datasets 1, 2 and 3 are respectively illustrated in **Figures 7a, 7b** and **7c.** In said three figures, each box corresponds to a (q, l) pair made of a sender cluster and a receiver cluster. The vertical position of the boxes corresponds to the row clusters q, and the horizontal position of the boxes corresponds to the column clusters l. For one given boc=x, i.e. one sender cluster-receiver cluster pair, the density of the grid represents the parameter $\pi_{ql}$ of connection probability, and the type of pattern of the grid represents the majority topic. In all of the three setups of datasets 1 to 3, the number M of senders and the number D of receivers are both equal to 120.
For instance, in the first setup of Figure 7a (Dataset 1), the number of row clusters is equal to the number of column clusters (Q = L = 3). Denser colored grids on the diagonal represent the higher connection probabilities of 30%. Topic A corresponds to the tiled pattern and Topic B corresponds to the horizontal striped pattern.
In the setups of Figures 7b and 7c (Datasets 2 and 3 respectively), Topic C is introduced, corresponding to the vertical striped pattern, in addition to Topics A and B.

In terms of performance of the LTBM inference versus an inference method based on an LBM model, we can note the following:

- Both inference methods are expected to correctly infer the latent row clusters and column clusters of Dataset 1;
- As for Dataset 2, an LBM inference is not expected to distinctly recover the first and second column clusters, because, for a receiver of the first cluster and a receiver of the second cluster, the probabilities of connection with a sender of the first row cluster are the same, and the probabilities of connection with a sender of the second row cluster are the same;
- As for Dataset 3, an LBM inference is expected to provide a much less precise co-clustering than the LTBM inference. The LBM inference is expected to return one single row cluster for latent row clusters q=1 and q=2, and one other single row cluster for q=3 and q=4, while also returning one single column cluster for l=1 and l=2.

As an illustrative example, we consider below an iteration of the method of Figure 6, taking Dataset 3 as an input. Optionally, the method comprises a step (not illustrated) of ordering of the files of Dataset 3, in order to generate one file vector $W^{ij}$ per file. Alternatively, as represented in Figure 6, the co-clustering method directly takes the file vectors $W^{ij}$ as an input.
The method comprises an advantageous, but not mandatory, step 50 of pre-processing of the words (the elements) of the file vectors $W^{ij}$, in order to reduce the number of words which are considered separately for inference of the topics k. Pre-processing step 50 more specifically comprises any of the following operations considered alone or in combination:

- deleting a word v of the dictionary which is shorter than a predetermined length,
- deleting a word v of the dictionary which is included in a predetermined list of stopwords, pre-loaded in a memory,
- deleting non-alphabetic characters in the file vectors,
- detecting, among the words of the dictionary, a technical descriptor of words which have a same root, and replacing said technical descriptor of words in the dictionary with the same word which preferably corresponds to said root,

- deleting a word of the dictionary which is used less than a predetermined number of times in all the file vectors considered together.

An advantage of this pre-processing is to reduce the computation time of the subsequent inference. An additional advantage is that, if lists of words corresponding to topics are provided to an end user, the lists will be easier to interpret because they will not comprise "useless" words such as very small words or non-text elements, or groups of words having the same word root.
After pre-processing, with a therefore reduced dictionary of words v, the co-clustering 20 is run taking the file vectors as an input as well as a triplet (Q, L, K) of hyper-parameters. Step 20 comprises, for instance, the steps of the co-clustering method described above in relation to Figure 3. Preferably, step 20 also comprises a step of displaying on the display unit 11 lists of words corresponding to topics k. For instance, for each topic k, a predetermined number of words having the highest probabilities $\beta_{kv}$ of being used in relation to topic k are displayed.

• *Co-clustering results*

**Figure 8a** displays the evolution of the value of lower bound L of the LTBM model, as defined above, according to the number of iterations of inference. One value of the lower bound corresponds to one point of the curve, and also to one iteration as represented in Figure 5. The value of the lower bound does not vary significantly starting from the seventh iteration, with respect to the variation between the first iterations.
**Figure 8b** displays a representation of an ordered incidence matrix $A^{ij}$ obtained as an output of the co-clustering. The senders are ordered as a function of their final row cluster, and the receivers are ordered as a function of their final column cluster. A black dot corresponds to the existence of a connection between the sender of the corresponding row and the receiver of the corresponding column. However, the topic structure (the majority topics between a row cluster and a column cluster) is not represented here. It is possible to have a representation of an ordered incidence matrix showing both the probabilities of connections, as is the case in Figure 8b, and the majority topics, using for instance one color of the dots per majority topic.

• *Model selection - Calculation of best-fit hyper-parameters*

A particular embodiment of a method 1 for co-clustering of the senders and receivers of a set of digital files is schematically represented in **Figure 9.**
While a set of files according to Dataset 3 is used as an input here, any other set of digital files comprising files having images and/or words as elements, can be taken as an input of method 1.
During one iteration of the co-clustering method 20 described above, the values of the hyper-parameters Q, L and K are held fixed. However, it is advantageous to use a method for co-clustering without any preliminary assumption on the values of the hyper-parameters, or with ranges of assumed possible values of the hyper-parameters. To this effect, method 1 automatically determines, in a list of parameter triplets (Q, L, K), an optimal set (Q*, L*, K*) of hyper-parameters which fits Dataset 3 best.
The task of estimating Q, L and K can be viewed as a model selection problem. We hereby consider, for operating said model selection, a BIC-like criterion which is known to have relevant asymptotic properties. Such a criterion estimates the marginal log likelihood using a Laplace approximation, and allows to select the most appropriate values for hyper-parameters Q, L and K in view of the input data representative of the digital set of files, i.e. the file vectors $W^{ij}$.
Method 1 comprises a first step wherein the steps of method 20 - not necessarily comprising the generation of the incidence matrix if it is already available, and not necessarily comprising the graphical representation of row clusters and/or column clusters and/or topics - are repeated at least one time for each set of hyper-parameters (Q, L, K) taken as an input. The obtained optimized row clusters, column clusters and topics are potentially different for each of the triplets of hyper-parameters.
In addition, for each triplet (Q, L, K), a quality score in accordance with the LTBM generative model is calculated at a step 400, taking the optimized variables and parameters of the LTBM model (for the values (Q, L, K) of the hyper-parameters) as an input.
The quality score of step 400 is calculated as a sum of a BIC-like criterion (for Bayesian Information Criterion) and an ICL-like criterion (for Integrated Classification Likelihood), which, in the context of the LTBM model, aims at approximating the integrated complete data log-likelihood. The expression of the BIC part of the quality score is set as follows:

$$BIC_{LDA|Y,X} := \max_{\beta} p(W|\beta, A, Y, X) - K\frac{V-1}{2}\log(QL)$$

The first term of the right-hand side of the above equation can be replaced by the value of the lower bound L for the optimized row clusters, column clusters and topics obtained with the values (Q, L, K) of the hyper-parameters. Besides, the term K*(V-1)/2 accounts for the number of free parameters in β.

The expression of the ICL criterion for the LTBM is as follows:

$$ICL_{LBM} := \max_{\pi,\rho,\delta} \log p(A, Y, X|\pi, \rho, \delta, Q, L) - \frac{QL}{2}\log(MD) - \frac{Q-1}{2}\log M - \frac{L-1}{2}\log D$$

The equations above correspond respectively to a BIC-like term for a generative model of a number Q x L of documents (corresponding to the aggregates $W^*_{ql}$), and an ICL criterion for the part of LTBM relating to the existence of connections in the incidence matrix, said ICL part being further detailed in publication *Keribin et al. (2012)*[12].

Finally, the quality score for the triplet (Q, L, K) of hyper-parameters is determined in step 400 as the sum of the $BIC_{LDA|Y}$, x term and the ICLLBM term above.

As a result of step 10, one quality score is stored in memory for each tested triplet of hyper-parameters (Q, L, K). Method 1 then comprises a step 30 of selecting, among the different sets of hyper-parameters (Q, L, K), an optimal set of hyper-parameters (Q*, L*, K*) based on the calculated quality scores.

Since Dataset 3 has been previously built with the specific connections and topics schematically shown in Figure 7c, the model selection of step 30 is expected to return the same hyper-parameters as those used to build the dataset, i.e. Q* = 4, L* = 3, and K* = 3.

The result of the calculations of the quality scores for each tested triplet (Q, L, K) is shown in the table of **Figure 10.** For a number of topics equal to K = 3, the configuration with four row clusters and three column clusters is determined as the most fitting, with a quality score of 47, whereas the other quality scores are much lower. For a number of topics equal to K = 4, the obtained quality scores are also much lower than 47. Thus, step 30 returns (Q*, L*, K*) = (4, 3, 3). This test shows that the quality score described above is efficient for determining the best-fitting values of the hyper-parameters.

Optionally, at a step 40, the processing unit 10 determines a representation of an ordered incidence matrix $A^{ij}$, using the co-clustering of senders and receivers previously saved in memory as a result of step 20, for the values (Q*, L*, K*) of the hyper-parameters. Alternatively, or in combination, a graphical representation of the model selection (for instance, the table of Figure 10) is shown.

Optionally, as an alternative or in combination to the incidence matrix, the processing unit 10 determines a representation of the final topics obtained as a result of the co-clustering method for the values (Q*, L*, K*). **Figure 11** displays an example of such topic representation, for a different dataset to the Dataset 3. The twelve topics of Figure 11 are obtained as a result of co-clustering method 1, on the basis of a dataset comprising reviews of fine foods available on a Web marketplace. To reduce sparsity of the incidence matrix, only the users (senders) who produced more than twenty reviews are considered, and only the products (receivers) which at least fifty reviews are about are considered. After pre-processing each of the reviews at step 50, by stemming words, removing stop words, and deleting the punctuation signs and the numbers, the latent sender clusters, receiver clusters and latent topics corresponding to the LTBM model are inferred.

In the graphical representation of Figure 11, the 25 majority words of each topic are shown: for a topic k, the words v having the highest probability $\beta^*_{kv}$ are shown. Said words are considered as the most representative words of the topic k. For instance, in the reviews dataset taken as an input, there is a column cluster indexed as the eleventh cluster, which groups dog food items of a "wellness" range of products. There are two main topics involved in the reviews about products of said cluster: Topic 2 and Topic 4. Expectedly, the words "dog" and "food" appear as majority words of both inferred topics 2 and 4. The word "wellness" appears in Topic 4, and the word "treat" appears in Topic 2. Surprisingly, the word "cat" is a majority word of Topic 4; this is because, in some reviews, the reviewers discuss the differences between dog food and cat food.

An advantage of providing such representation of the topics is that the results are highly interpretable, and in addition, the accuracy of the final topics (i.e. whether the words which are grouped together are actually semantically close) can be evaluated by the human reader.

**Example 2: Co-clustering based on an image dataset**

In this example, the elements of each file vector $W^{ij}$ corresponding to the set W are images, or sub-images. For example, the images are photographs posted by users of a reviews website, in accompaniment of a text review for a specific place (or product). A file vector $W^{ij}$ comprises one or several images posted by user i about place j. By "sub-images" we refer to a subset of pixels of an image which are contiguous, preferably pixels of a rectangle-shaped area. The latent topics therefore correspond to groups of images or sub-images. An example of a step for extraction of sub-images which are relevant to the topic determination will be described hereafter. The digital files are photographs saved in memory in any image format, for example .jpeg images.

The steps of a particular embodiment of a co-clustering method, taking a set of digital images as an input, are schematically represented in **Figure 12.**

The method of said embodiment corresponds to the method 20 of Figure 3, with additional preliminary steps 60 and 70. The method takes as an input the file vectors $W^{ij}$ corresponding to the set of digital images. Conversely to the case of a text, wherein each word is separated from the others (and thus, the elements of a file vector are already distinct), it is preferable to run, prior to the determination of the topics in the LTBM inference step, a separation of the elements of the digital images, i.e. an identification of relevant sub-images in the images.

In this example, this identification is done at a step 60 using algorithms of computer vision. The identified sub-images are also referred to as "patches". More particularly, significant technical patterns are automatically detected in the images, using an algorithm of feature detection. A significant technical pattern corresponds to a pixel or zone of an image which is detected as characteristic of the objects present in the image.

The significant technical pattern preferably corresponds to an edge between two objects or between an object and the background, wherein the edge is preferably detected by determining the pixels having a high gradient magnitude, or corresponds to a corner or an interest point of the image.

Then, once the significant technical patterns are detected, patches are extracted and saved in memory. For instance, each patch is a rectangle-shaped part of the image, centered on a significant point or line.

Preferably, patch extraction at step 60 is done by running a feature detection algorithm which is part of a SIFT ("Scale-Invariant Feature Transform") algorithm. The SIFT algorithm, which will not be described in detail here, allows to detect similar elements between several images, for example in order to perform object recognition on the images. The SIFT algorithm is built such that the detected features (the technical patterns) are not affected by changes in scale, light, or orientation.

In order to perform semantic analysis on the basis of the extracted patches, the co-clustering method comprises a subsequent step 70 of calculation of technical descriptors on the basis of the patches.

In a preferred embodiment, identification of the visual words is done by running a feature description algorithm generating SIFT features on the basis of the previously detected patches. In said embodiment, each visual word v' is typically a vector of size 128. Said vector is calculated on the basis of 16 histograms extracted from sub-regions of the patch around the significant technical pattern. Each histogram comprises magnitude and orientation values of the corresponding sub-region. The vector comprises eight values for each descriptor, and therefore has a size 128. Any other operation typically used for SIFT feature description, such as pre-processing or normalization of the descriptors, can be done in combination with the calculation of the technical descriptors.

The use of SIFT technical descriptors is especially advantageous because the SIFT algorithm produces highly efficient features for object identification. Two distinct photographs of the same object, taken with different scales, orientations and/or light environments are likely to produce the same main technical descriptors, therefore accurately describing the object.

Alternatively, or in combination with said type of visual word, the calculated visual words correspond to vectors calculated on the basis of non-linear filtered portions of the image, or correspond to gradient histograms of parts of the image.

The dictionary which is used for topic detection during the step 20 of co-clustering comprises all the detected visual words v'.

Optionally, the visual word detection step 70 also comprises a pre-processing of the visual words prior to determination of the co-clustering, with the following operations considered separately or in any combination:

- deleting a visual word of the dictionary which is detected as not corresponding to any significant shape,
- detecting, among the visual words of the dictionary, a subset of visual words which have similar characteristics (for example calculating a distance between the vectors), and replacing visual words of said subset with a same vector,
- deleting a visual word of the dictionary which is used less than a predetermined number of times in the whole set of digital images.

Optionally, the total number of distinct visual words is reduced by running a segmentation algorithm, such as a K-means algorithm. Each of the clusters of visual words obtained by K-means can be replaced by the means of the vectors of the cluster.

An advantage of the pre-processing step is to greatly reduce the length of the dictionary v', and therefore to reduce the complexity and calculation time for topic detection.

Afterwards, the proper co-clustering is executed at step 20, for example in accordance with the method of Figure 3. In Figure 12, the co-clustering at step 20 takes a single triplet (Q, L, K) of hyper-parameters as an input, but the co-clustering can also include a selection of the best-fit model as described above. The determined row clusters and column clusters have the same form as described above, and the determined topics are groups of visual words. If a representation of the final topics is provided, each visual word can be replaced by the patch it is associated with, so as to render the topics more interpretable by a human reader.

A simple example for patch detection and co-clustering on the basis of a set of images is provided in Figures 13 to 15.

In **Figure 13,** the result of the execution of patch detection step 60 on an image of a bike, which is part of a file vector, is represented. Each rectangular box in dotted line corresponds to one detected patch.

**Figure 14** is a schematic representation of the result of visual word detection and pre-processing step 70, taking the patches detected as a result of step 60 as an input.

A standardized image of a front wheel of a bike is saved in memory, corresponding to a visual word v*. The visual word, which is not represented in Figure 14, is a SIFT technical descriptor of the standardized image, of size 128. Alternatively, the standardized image is associated with a list of several visual words and contains several patches.

During a pre-processing, patches 1302 are discarded after being determined as irrelevant for the topic detection of the LTBM inference, for example by image recognition or processing of the corresponding visual words. The discarded patches are assumed to correspond to non-identifiable parts of the image of the bike. Besides, visual words are calculated in association with each patch.

The calculated visual words are used for topic detection in the subsequent inference of the LTBM model of the set of digital files. Here, we suppose that the set of digital files comprises both text data and image data. For example, if each of the files is a review, the elements of the file vector corresponding to the file are either words of the text in the review, or images or sub-images of the pictures in the review. The result of topic detection is represented in **Figure 15,** wherein each column corresponds to one detected topic and comprises the majority elements of the topic:

- Topic 1 only contains patches relating to bikes;
- Topic 2 contains words and patches relating to fruit;
- Topic 3 only contains patches relating to clothing.

The patches of the image of Figure 13 which have not previously been discarded are associated with in Topic 1. In particular, patch 1300 corresponds to the rear wheel of the bike, and patch 1301 corresponds to the front wheel of the bike. The respective visual words of patch 1300 and patch 1301 have been compared to the visual word v*, and it has been determined that both patches correspond to wheels and should therefore be replaced by the standardized image. At a higher level of precision, it can be determined that, similar to the standardized image, patch 1301 corresponds to a front wheel, whereas patch 1300 corresponds to a rear wheel.

The co-clustering method of Figure 12 is especially advantageous for a set of digital files comprising only image data, or comprising both text and image data, because said method allows performing co-clustering of senders and receivers without a textual description of the content of the image.

The co-clustering method according to any of the above-described embodiments. Possible applications include: in healthcare, the identification of similar patients from their medical records, the codification of medical procedures, or pharmacovigilance; in e-commerce, the detection of groups of clients who are dissatisfied with groups of products; in scientific research, the identification of frequent authors and frequent subjects to provide a scientific watch.

**Cited references**

1 Thomas George and Srujana Merugu, A scalable collaborative filtering framework based on co-clustering, in Data Mining, Fifth IEEE International Conference, pages 4-pp. IEEE, 2005.

2Arindam Banerjee, Inderjit Dhillon, Joydeep Ghosh, Srujana Merugu, and Dharmendra S. Modha, A generalized maximum entropy approach to Bregman co-clustering and matrix approximation, Journal of Machine Learning Research, 8(Aug): 1919-1986, 2007.

3 Shiping Wang and Aiping Huang, Penalized nonnegative matrix tri-factorization for co-clustering, Expert Systems with Applications, 78:64-73, 2017.
4 Gerard Govaert and Mohamed Nadif, Clustering with block mixture models, Pattern Recognition, 36(2):463-473, 2003.
5 Gerard Govaert and Mohamed Nadif, Latent block model for contingency table, Communications in Statistics: Theory and Methods, 39(3):416-425, 2010.
6 Christine Keribin, Vincent Brault, Gilles Celeux, and Gerard Govaert, Estimation and selection for the latent block model on categorical data, Statistics and Computing, 25(6): 1201-1216, 2015.
7 Julien Jacques and Christophe Biernacki, Model-based co-clustering for ordinal data, 2017.
8 D.M. Blei, A. Y. Ng, and M. I. Jordan, Latent Dirichlet Allocation, in the Journal of Machine Learning Research, 3:993-1022, 2003.
9 Pu Wang, Carlotta Domeniconi, and Kathryn Blackmond Laskey, Latent Dirichlet Bayesian Co-Clustering, in Joint European Conference on Machine Learning and Knowledge Discovery in Databases, pages 522-537. Springer, 2009.
10 Ulrike von Luxburg, A tutorial on spectral clustering, Statistics and Computing, 17(4):395- 416, 2007. ISSN 1573-1375. doi: 10.1007/s11222-007-9033-z. URL: http://dx.doi.org/10.1007/s11222-007-9033-z.
11 Christine Keribin, Vincent Brault, Gilles Celeux, Gerard Govaert, et al., Model selection for the binary latent block model, in Proceedings of COMPSTAT, volume 2012, 2012.

## Claims

**1.** A computer-implemented co-clustering method, in which a set of digital files of a numerical information system, produced by senders towards receivers different from the senders, is processed,
each file corresponding to images and/or text data,
each file of the i-th sender towards the j-th receiver corresponding to a file vector $W^{ij} = (W^{ij}_n)$, with $W^{ij}_n$ the n-th element of the file vector and $N^{ij}$ the number of elements of $W^{ij}$, wherein an element is a distinguishable unit of digital text data or digital image data contained in said file,
wherein said method achieves automated co-clustering of the receivers and of the senders, based on topics of the elements in the file vectors,
wherein the method comprises the following steps:

1) construction (100) of an incidence matrix $A = (A_{ij})$,
each of the rows i of the incidence matrix A corresponding to one of the senders, with M the number of senders, and each of the columns j of the incidence matrix A corresponding to one of the receivers, with D the number of receivers,
the value of an entry $A_{ij}$ being non-null only if there is one file vector $W^{ij} = (W^{ij}_n)$ produced by sender i towards receiver j in the set of files,
2) initialization (200) through calculating a first estimated row clustering $Y=(Y_1, Y_2,...,Y_M)$ of the rows i of the incidence matrix A with a predetermined number Q of row clusters, and calculating a first estimated column clustering $X=(X_1, X_2,...,X_D)$ of the columns j of the incidence matrix A with a predetermined number L of column clusters,
3) inference (300) of a generative model, each entry $A_{ij}$ of the incidence matrix A being modeled according to a Latent Block Model, and each file vector $W_{ij}$ being modeled according to a generative model of file vectors, wherein the third step comprises:

- (a) calculating, on the basis of the estimated row clustering Y and the estimated column clustering X, updated topics k between the row clusters and the column clusters, wherein a topic k is a set of elements which co-occur most frequently in the file vectors between a row cluster and a column cluster,
- (b) on the basis of a statistical criterion which is a function of proportions of at least some of the updated topics in the file vectors produced by senders of a same row cluster i of the estimated row clustering Y towards receivers of a same column cluster j of the estimated column clustering X,

updating the estimated row clustering Y and the estimated column clustering X,
4) a fourth step in which the third step 3) is repeated, on the basis of the new estimated clusterings Y and X calculated in sub-step (b), until a convergence criterion is fulfilled,

the method resulting in final topics k, a final row clustering Y and a final column clustering X being a function of the co-occurrence of elements belonging to the same topics in the file vectors produced by senders of a same row cluster towards receivers of a same column cluster.

**2.** The method of claim 1, wherein the step 3) of inference (300) comprises the following sub-steps:

(a) for each row cluster q and each column cluster l of respectively the estimated row clustering Y and estimated column clustering X, calculating (311) a proportion $\rho_q$ of the row cluster q among all row clusters, a proportion $\delta_l$ of the column cluster l among all column clusters, and a probability $\pi_{ql}$ that a sender of row cluster q produces a file vector towards a receiver of column cluster l,
(b) calculating (312, 313), from the estimated clusterings Y and X:

- probability vectors $\theta_{ql} = (\theta_{ql}{}^k)$ of topic proportions for all of the elements of the file vector produced by a sender of row cluster q towards a receiver of column cluster l,
- and a probability $\beta_{kv}$ of each element v of a dictionary being used in relation to topic k,

the dictionary comprising all elements which appear in at least one file vector, said elements $W_{ij}$ being re-indexed in said dictionary as elements v,
said determination of probabilities $\theta_{ql}$ and $\beta_{kv}$ being done as a function of a criterion of co-occurrence of elements v in the file vectors,
(c) calculating (320, 321) new estimated clusterings Y and X,
by assigning each row i of matrix A to an optimal row cluster which provides a maximum value of the statistical criterion when said row i is assigned to said row cluster, said statistical criterion being a function of calculated proportions $\delta_l$ and $\rho_q$ and calculated probabilities $\theta_{ql}$, $\beta_{kv}$ and $\Pi_{ql}$ of the sub-steps (a) and (b),
and by assigning each column j of matrix A to an optimal column cluster which provides a maximum value of the same statistical criterion.

**3.** The method of one of claims 1 or 2, wherein:

- the numerical information system is a communications network such as the Internet, or a management information system;
- the data files are digital images, comments, reviews, messages, articles, texts, which are loaded on websites or in a software;
- the senders represent physical persons, legal persons, or identifiers;
- the receivers represent physical persons, legal persons, identifiers;

**4.** The method of one of claims 1 to 3, wherein:

- knowing that the sender i belongs to the group q with the probability $\rho_q$, and that the receiver j belongs to the group l with the probability $\delta_l$, the probability $\pi_{ql}$ that sender i produces a file vector towards j is only a function of q and l;
- knowing that there is a file vector of the sender i towards the receiver j, a random variable $Z^{ij}$, wherein $Z^{ij}{}_n$ = k if the n-th element of file vector $W^{ij}$ produced by sender i towards receiver j relates to the k-th topic, follows a first multinomial law, a parameter of said first multinomial law depending only on the row cluster of i and the column cluster of j;
- knowing the topic k of this element $W^{ij}{}_n$, the element $W^{ij}{}_n$ is chosen in the dictionary according to a second multinomial law, a parameter of said second multinomial law depending only on the topic k.

**5.** The method of one of claims 1-4, wherein the sub-step (b) of the step of inference (300) of the generative model of the file vectors comprises the following sub-steps:

(b1) for each row cluster q and each column cluster l, aggregating (312) all the file vectors $W^{ij}$ produced by any sender i of row cluster q towards any receiver j of cluster l, resulting in an aggregate $W^*{}_{ql}$,
(b2) analyzing co-occurrence of elements v among the aggregates $W^*{}_{ql}$ in order to determine topics k, the number K of topics k being predetermined, and estimating (313):

- a distribution $q(Z,\theta)$ of a random variable $Z^{ij}$,
- and the probabilities $\theta_{ql}$ and $\beta_{kv}$,

(b3) repeating sub-steps (b1) and (b2) of the sub-step (b) a predetermined number of times, for example ten times.

6. The method of one of claims 1-5, wherein each entry $A_{ij}$ of the incidence matrix A is modeled according to the Latent Block Model with the following distribution:

$$p(A, Y, X|\pi, \rho, \delta) = p(A|Y, X, \pi)\, p(Y|\rho) p(X|\delta)$$

wherein

$$\begin{aligned} p(A|Y, X, \pi) &= \prod_{i=1}^{M} \prod_{j=1}^{D} p(A_{ij}|Y_i, X_j, \pi) \\ &= \prod_{i=1}^{M} \prod_{j=1}^{D} \left( \prod_{q=1}^{Q} \prod_{l=1}^{L} \left( \mathcal{B}(A_{ij}, \pi_{ql}) \right)^{Y_{iq} X_{jl}} \right) \end{aligned}$$

and

$$\begin{aligned} p(Y, X|\rho, \delta) &= p(Y|\rho) \times p(X|\delta) \\ &= \prod_{i=1}^{M} \rho_{Y_i} \times \prod_{j=1}^{D} \delta_{X_j} \\ &= \prod_{i=1}^{M} \prod_{q=1}^{Q} \rho_q^{Y_{iq}} \times \prod_{j=1}^{D} \prod_{l=1}^{L} \delta_l^{X_{jl}} \end{aligned}$$

wherein $A_{ij}$ is a random variable which, conditionally on row clustering Y and column clustering X, follows a Bernoulli distribution solely dependent on probability $\pi_{ql}$ with sender i being in row cluster q and receiver j being in column cluster l.

7. The method of one of claims 1-6, wherein in the generative model of file vectors $W^{ij}$, the file vectors $W^{ij}$ produced by sender i towards receiver j is modeled with the following distribution:

$$p(W, Z, \theta|A, Y, X, \beta) = p(W|Z, A, \beta) p(Z|A, Y, X, \theta) p(\theta),$$

wherein

$$p(W|Z,A,\beta)=\prod_{i=1}^{M}\prod_{j=1}^{D}p\left(W^{ij}|Z^{ij},\beta\right)^{A_{ij}}$$

$$=\prod_{i=1}^{M}\prod_{j=1}^{D}\left(\prod_{n=1}^{N^{ij}}p\left(W_n^{ij}|Z_n^{ij},\beta\right)\right)^{A_{ij}}$$

$$=\prod_{i=1}^{M}\prod_{j=1}^{D}\left(\prod_{n=1}^{N^{ij}}\prod_{k=1}^{K}\left(\prod_{v=1}^{V}(\beta_{kv})^{W_{nv}^{ij}}\right)^{Z_{nk}^{ij}}\right)^{A_{ij}}$$

and

$$p\left(Z|A,Y,X,\theta\right)=\prod_{i=1}^{M}\prod_{j=1}^{D}p\left(Z^{ij}|Y_i,X_j,\theta\right)^{A_{ij}}$$

$$=\prod_{i=1}^{M}\prod_{j=1}^{D}\left(\prod_{q=1}^{Q}\prod_{l=1}^{L}p\left(Z^{ij}|\theta_{ql}\right)^{Y_{iq}X_{jl}}\right)^{A_{ij}}$$

$$=\prod_{i=1}^{M}\prod_{j=1}^{D}\left(\prod_{q=1}^{Q}\prod_{l=1}^{L}\left(\prod_{n=1}^{N^{ij}}\prod_{k=1}^{K}\theta_{qlk}^{Z_{nk}^{ij}}\right)^{Y_{iq}X_{jl}}\right)^{A_{ij}},$$

with the random variable $Z^{ij}$ following a multinomial distribution parametrized by probabilities of topic proportions $\theta_{qlk}$, thus depending only on row cluster q of sender i and column cluster l of receiver j,
with the topic proportions $\theta_{qlk}$ following a Dirichlet distribution parametrized by a vector $\alpha = (\alpha_k)$,
and with each element $W_{ij}^n$ of file vector $W_{ij}$ following a multinomial distribution parametrized by the probability vector $\beta_k = (\beta_{kn})$, thus depending only on the topic k which said element $W_{ij}^n$ belongs to.

**8.** The method of one of claims 1 to 7, wherein the sub-step (c) of the inference step comprises the following sub-steps:

(c1) for each sender i,
calculating the row clustering of sender i which provides the maximum value of a predetermined lower bound L making for the statistical criterion,
the other estimated row clusters of the other senders being fixed as well as the column clusters of the receivers, and assigning sender i to the determined row cluster q in the new estimated row clustering Y,
then for each receiver j, calculating the column clustering of receiver j which provides the maximum value of said lower bound L, the other estimated column clusters of the other receivers being fixed as well as the row clusters of the senders calculated in the previous step,
and assigning the receiver j to the determined column cluster l in the new estimated column clustering X;
(c2) repeating sub-step (c1) a predetermined number of times, by each time going through every line and then every column,
the sub-step (c) resulting in the new estimated row clustering Y and column clustering X.

**9.** The method of claims 6, 7 and 8 together, wherein the lower bound L is as follows:

$$\mathcal{L}(q(\cdot)|A,Y,X,\beta) := \int_{\theta}\sum_{Z} q(Z,\theta)\log\frac{p(W,Z,\theta|A,Y,X,\beta)}{q(Z,\theta)}\mathrm{d}\theta$$
$$= \mathbb{E}_q\left[\log\frac{p(W,Z,\theta|A,Y,X,\beta)}{q(Z,\theta)}\right],$$

said lower bound being used during sub-steps (a), (b) and (c) of the inference step,
said lower bound being maximized during sub-steps (a) and (b) using a Variational Expectation-Maximization algorithm, with respect to distribution $q(Z,\theta)$ during expectation phase and with respect to parameters $\delta$, $\rho$, $\pi$ and $\beta$ during maximization phase.

**10.** The method of one of claims 1 to 9, wherein the first step 1) of initialization (200), taking the file vectors as an input, comprises:

- determining (220) initial topics k on the basis of the whole set of file vectors,
- calculating (230) a topic matrix $T = (T^{ij})$, wherein if $A^{ij}$ is non-null in the incidence matrix A, and if the main topic of file vector $W^{ij}$ is topic k, then $T^{ij} = k$,
- calculating (240) a square similarity matrix S of size M x M indexed by the senders i, wherein for each pair of senders $i_1$ and $i_2$, term $S_{i1i2}$ is equal to the value of a similarity function which is a function of the number of files produced by senders $i_1$ and $i_2$ towards the same receivers using the same main topics,
- estimating (250) a first estimated row clustering Y and a first estimated column clustering X as a function of the similarity matrices S and S'.

**11.** The method of one of claims 1 to 10, the steps (100, 200, 300) thereof being repeated several times for a plurality of sets of parameters (Q, L, K),
the method further comprising:

4) a fourth step (400) of calculating a quality score in accordance with the generative model of claim 1, for the set of parameters (Q, L, K),
5) a fifth step of repeating steps 1) to 4) for each of the different sets of parameters (Q, L, K),
6) a sixth step (20) of selecting, among the different sets of parameters (Q, L, K), an optimal set of parameters (Q*, L*, K*) based on the calculated quality scores,

the quality score preferably corresponding to a sum of a Bayesian Information Criterion for the generative model of file vectors, and an Integrated Classification Likelihood criterion,
the method outputting a final row clustering X and a final column clustering Y and final topics k reliant on the optimal set of parameters (Q*, L*, K*).

**12.** The method of one of claims 1 to 11, wherein the senders i, each of the senders having produced at least one file of the set of files, are one of: authors, customers, companies, messaging accounts, website accounts, bank accounts, healthcare practitioners, magazines,
and/or the receivers j, which at least one file of the set of files relates to, are one of: groups of articles, places, groups of messages, websites, patients, medicines, technical fields.

**13.** The method of one of claims 1 to 12, wherein the data are comments, reviews, messages or articles,
wherein the elements of the file vector $W^{ij}$ are words and the dictionary comprises words v,
the method comprising a subsequent step of displaying on a display unit, or communicating in computer-readable form, lists of words being used in relation to the final determined topics k.

**14.** The method of claim 13, further comprising, prior to the initialization step 1), a pre-processing (50) comprising at least one of:

deleting a word of the dictionary which is shorter than a predetermined length,
deleting a word of the dictionary which is included in a predetermined list of stopwords,
deleting non-alphabetic characters in text data,

detecting, among the words of the dictionary, a technical descriptor of words which have a same root, and replacing said technical descriptor of words in the dictionary with the same word which preferably corresponds to said root,
deleting a word of the dictionary which is used less than a predetermined number of times throughout the text data.

**15.** The method of one of claims 1 to 12, wherein the data are images, said images being stored in the processing unit as sets of pixels, and elements of a file vector $W^{ij}$ are visual words, each visual word representing an image or a part of an image of said file vector, said visual word being one of a technical descriptor of said image, a non-linear filtered portion of said image, a gradient histogram of said image,
the dictionary comprising visual words v',
the method comprising a subsequent step of displaying on a display unit, or communicating in computer-readable form, groups of visual words being used in relation to the final determined topics k.

**16.** The method of claim 15, further comprising, prior to the initialization step 1), a step of identifying visual words v' in the images of the file vectors,
said identification comprising, for each of the images, the extraction of a plurality of technical descriptors of said image, the extracted technical descriptors preferably being identified by automated detection of significant technical patterns, the extracted technical descriptors being stored in a memory of the processing unit as visual words v' of the dictionary.

**17.** The method of one of claims 15 or 16, further comprising, prior to the initialization step 1), a pre-processing comprising at least one of:

deleting a visual word of the dictionary which is detected as not corresponding to any significant shape,
detecting, among the visual words of the dictionary, a subset of visual words which have similar characteristics, and replacing visual words of said subset with a same visual word,
deleting a visual word of the dictionary which is used less than a predetermined number of times throughout the images of the file vectors.

**18.** The method of one of claims 1 to 17, wherein the data are images data and text data, the dictionary comprising visual words v' and words v,
wherein the method comprises a subsequent step of displaying on a display unit connected to the processing unit, or communicating in computer-readable form, lists of visual words and of words being used in relation to the final determined topics k.

**19.** A data processing unit (10) which is configured to execute the steps of the method of one of claims 1 to 18, the data processing unit comprising:

a first data processing sub-unit which is configured to receive a set of files produced by senders i relating to receivers j, and generate an incidence matrix on the basis of the files,
a second data processing sub-unit which is configured to calculate a first estimated row clustering Y of the senders i, and a first estimated column clustering X of the receivers j,
a third data processing sub-unit which is configured to determine topics in accordance with a generative model of file vectors,
and which is also configured to calculate proportions $\delta_l$ and $\rho_q$ and calculate probabilities $\theta_{ql}$, $\beta_{kv}$ and $\Pi_{ql}$ on the basis of a current estimated row clustering and a current estimated column clustering,
a fourth data processing sub-unit which is configured to calculate new estimated row clusters and new estimated column clusters on the basis of determined topics, calculated proportions $\delta_l$ and $\rho_q$ and calculated probabilities $\theta_{ql}$, $\beta_{kv}$ and $\Pi_{ql}$, by maximizing a statistical criterion,
and, optionally, a display unit (11) which is configured to display a visual representation of estimated row clusters and estimated column clusters and/or lists of words or visual words corresponding to estimated topics.

**20.** A computer program product comprising instructions which, when the program is executed by a processing unit, cause the processing unit to execute the steps of the method of one of claims 1 to 18.

FIG. 1

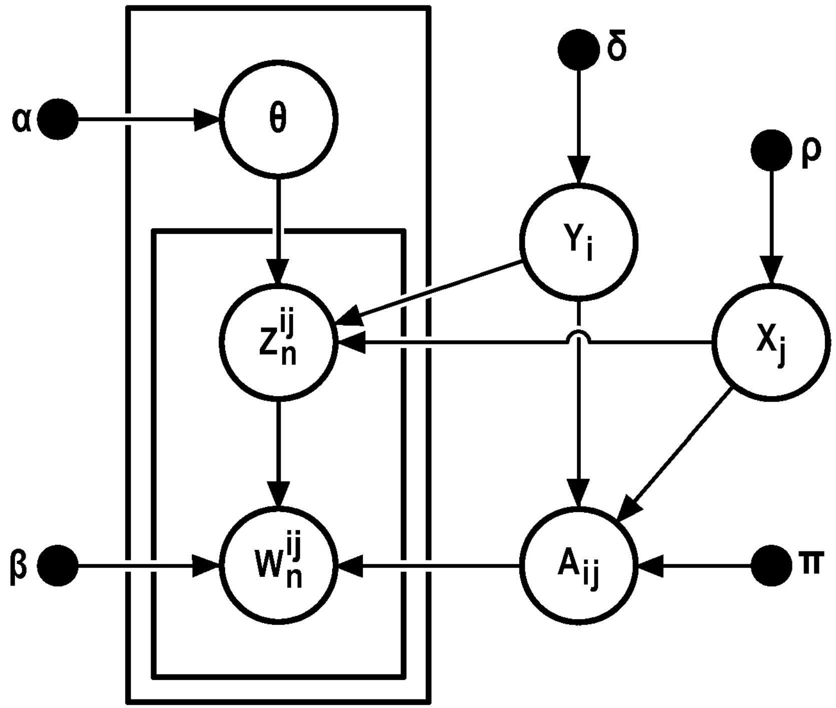


FIG. 2

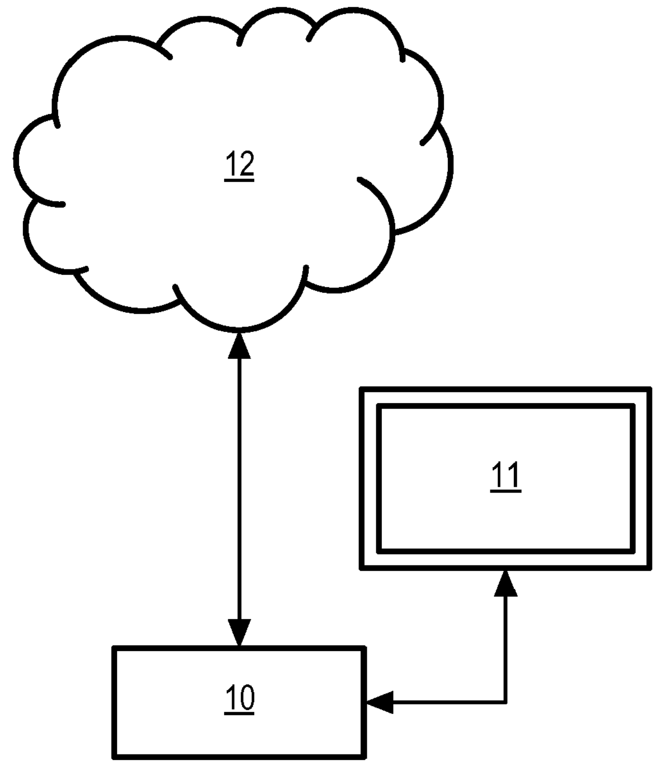

FIG. 3

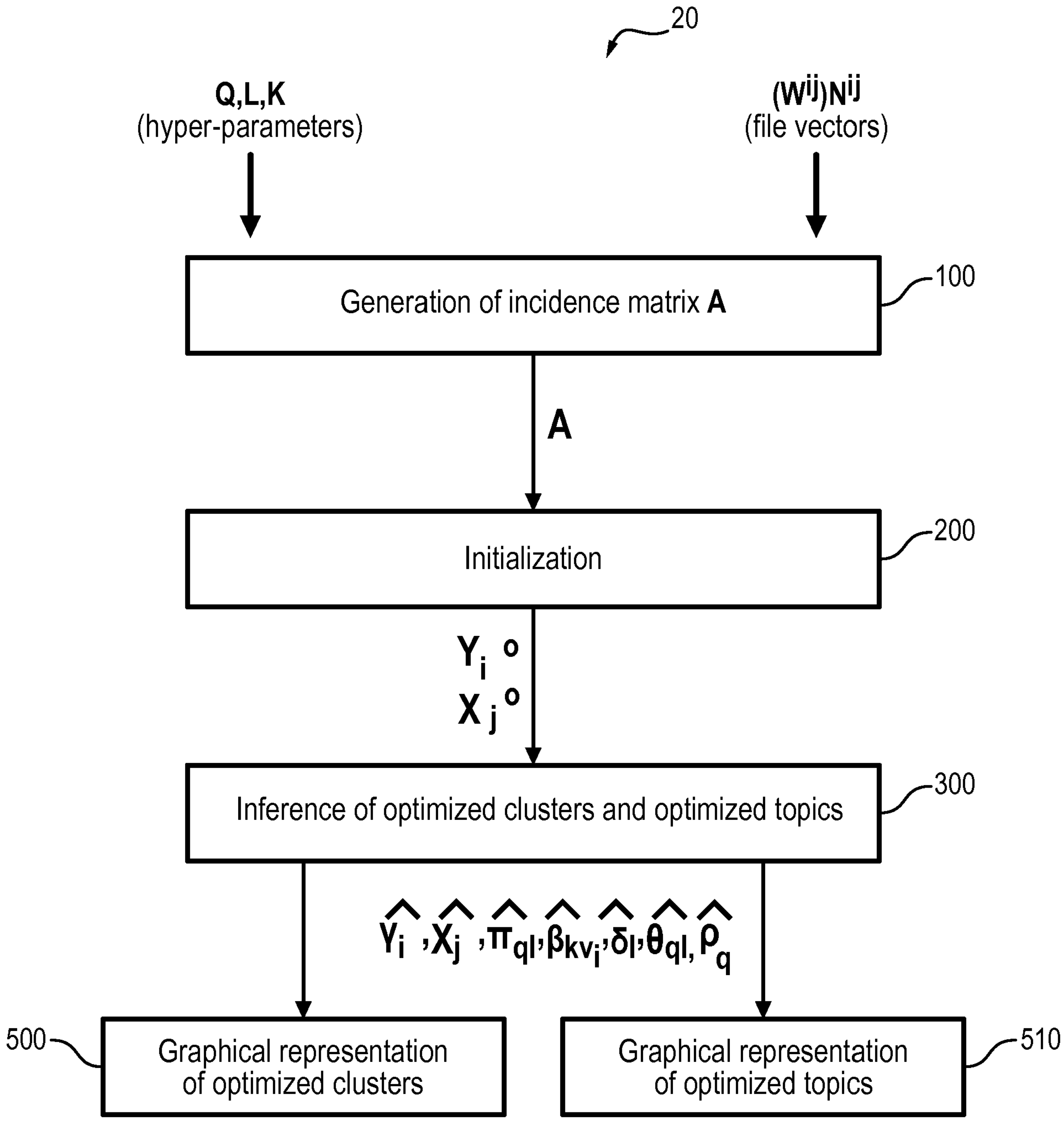
20
Q,L,K
(hyper-parameters)
(W^ij)N^ij
(file vectors)
Generation of incidence matrix A
100
A
Initialization
200
Y_i^o
X_j^o
Inference of optimized clusters and optimized topics
300
Ŷ_i, X̂_j, π̂_ql, β̂_kv_i, δ̂_l, θ̂_ql, ρ̂_q
Graphical representation of optimized clusters
500
Graphical representation of optimized topics
510

FIG. 4

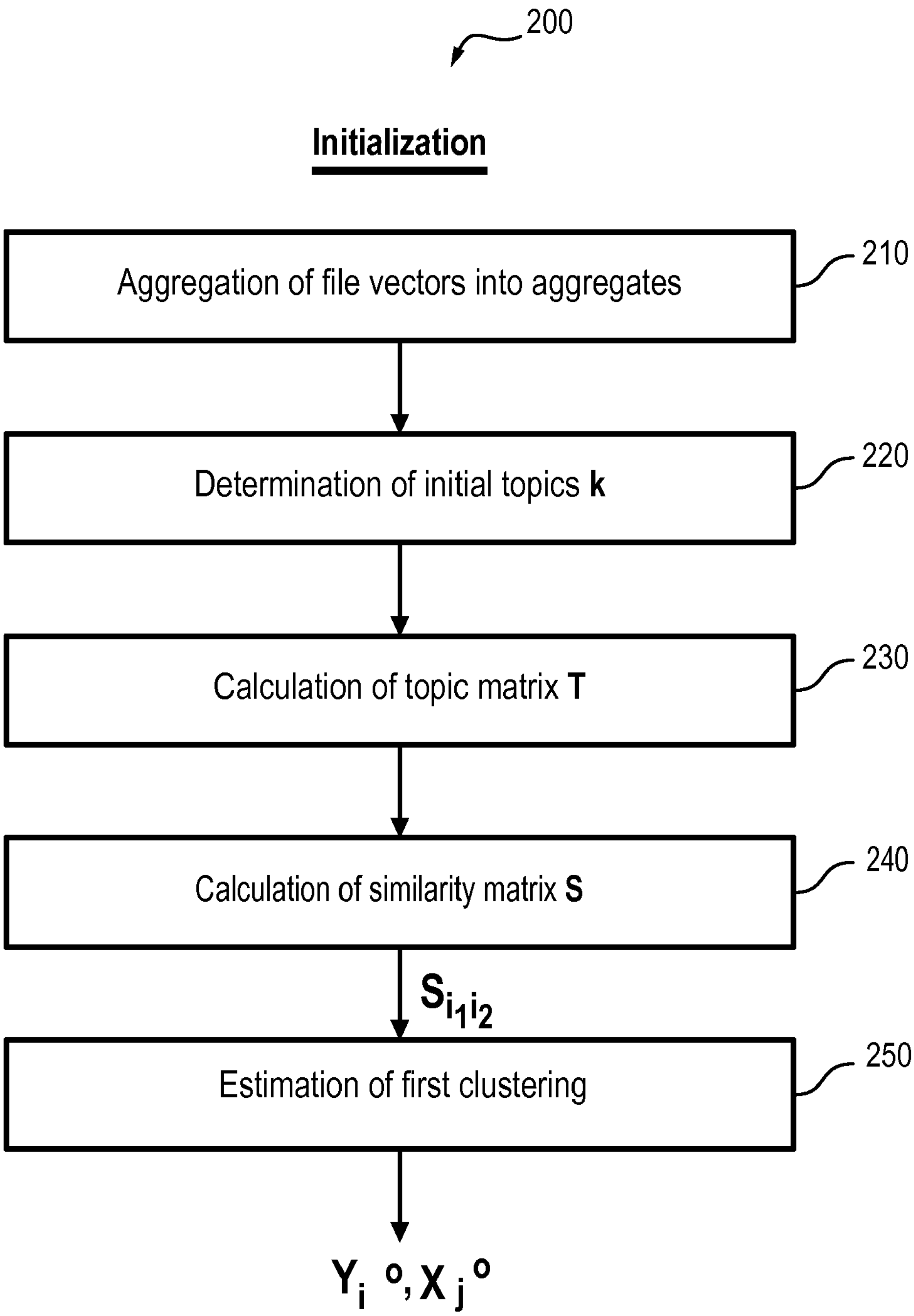
200
Initialization
Aggregation of file vectors into aggregates
210
Determination of initial topics **k**
220
Calculation of topic matrix **T**
230
Calculation of similarity matrix **S**
240
$S_{i_1 i_2}$
Estimation of first clustering
250
$Y_i^o, X_j^o$

FIG. 5

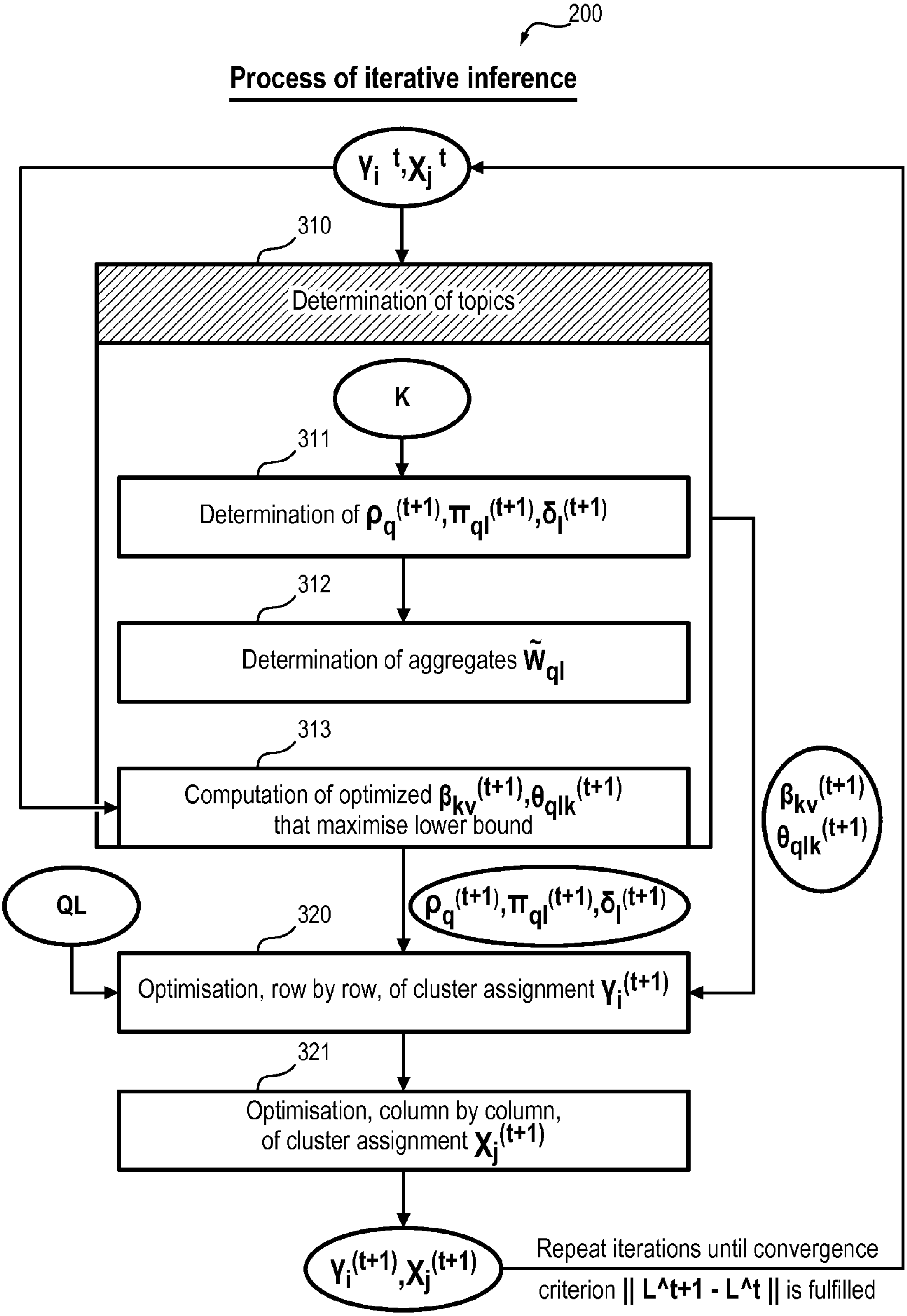
200
Process of iterative inference
$\gamma_i^t, \chi_j^t$
310
Determination of topics
K
311
Determination of $\rho_q^{(t+1)}, \pi_{ql}^{(t+1)}, \delta_l^{(t+1)}$
312
Determination of aggregates $\tilde{W}_{ql}$
313
Computation of optimized $\beta_{kv}^{(t+1)}, \theta_{qlk}^{(t+1)}$ that maximise lower bound
$\beta_{kv}^{(t+1)}$ $\theta_{qlk}^{(t+1)}$
QL
$\rho_q^{(t+1)}, \pi_{ql}^{(t+1)}, \delta_l^{(t+1)}$
320
Optimisation, row by row, of cluster assignment $\gamma_i^{(t+1)}$
321
Optimisation, column by column, of cluster assignment $\chi_j^{(t+1)}$
$\gamma_i^{(t+1)}, \chi_j^{(t+1)}$
Repeat iterations until convergence criterion || L^t+1 - L^t || is fulfilled

FIG. 6

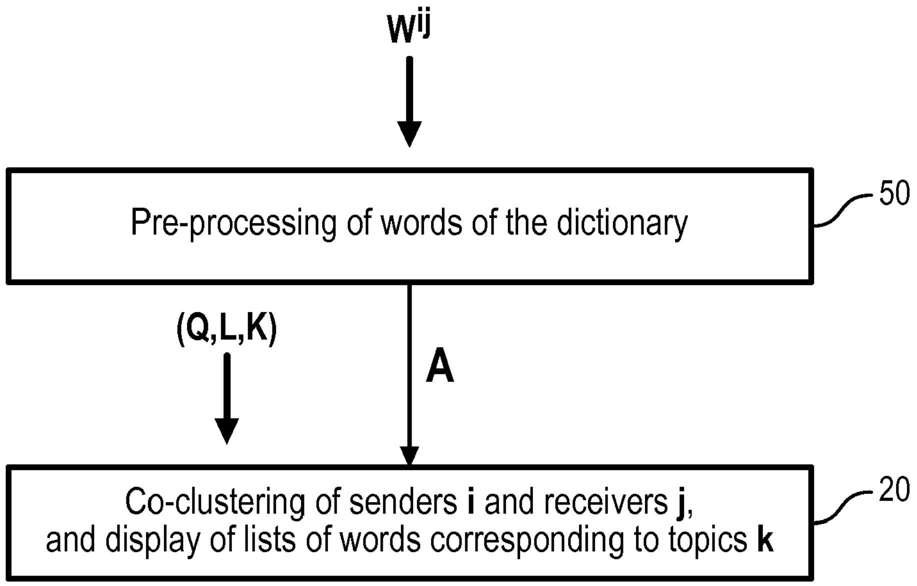
Wij
Pre-processing of words of the dictionary
50
(Q,L,K)
A
Co-clustering of senders i and receivers j,
and display of lists of words corresponding to topics k
20

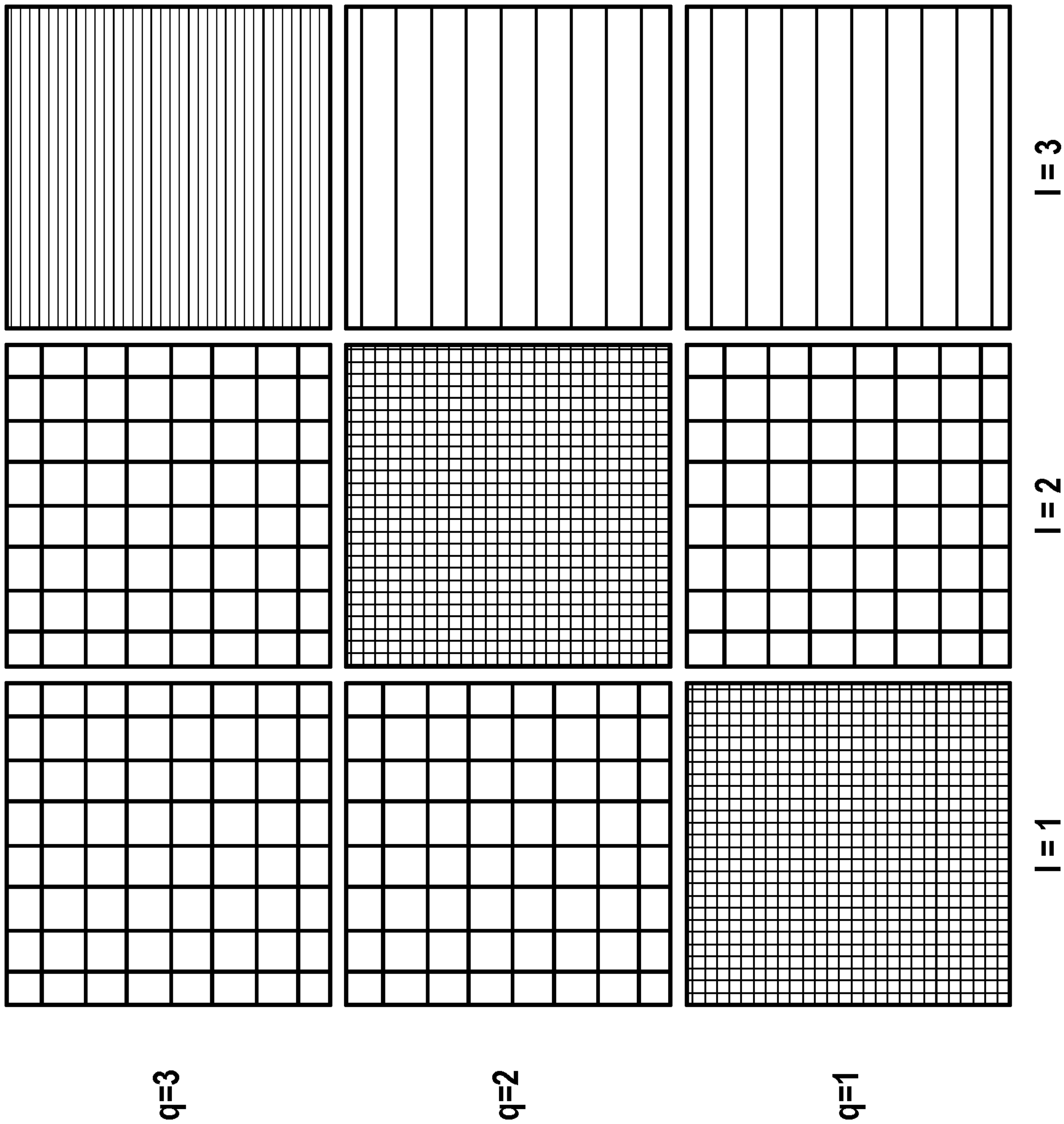


FIG. 7a

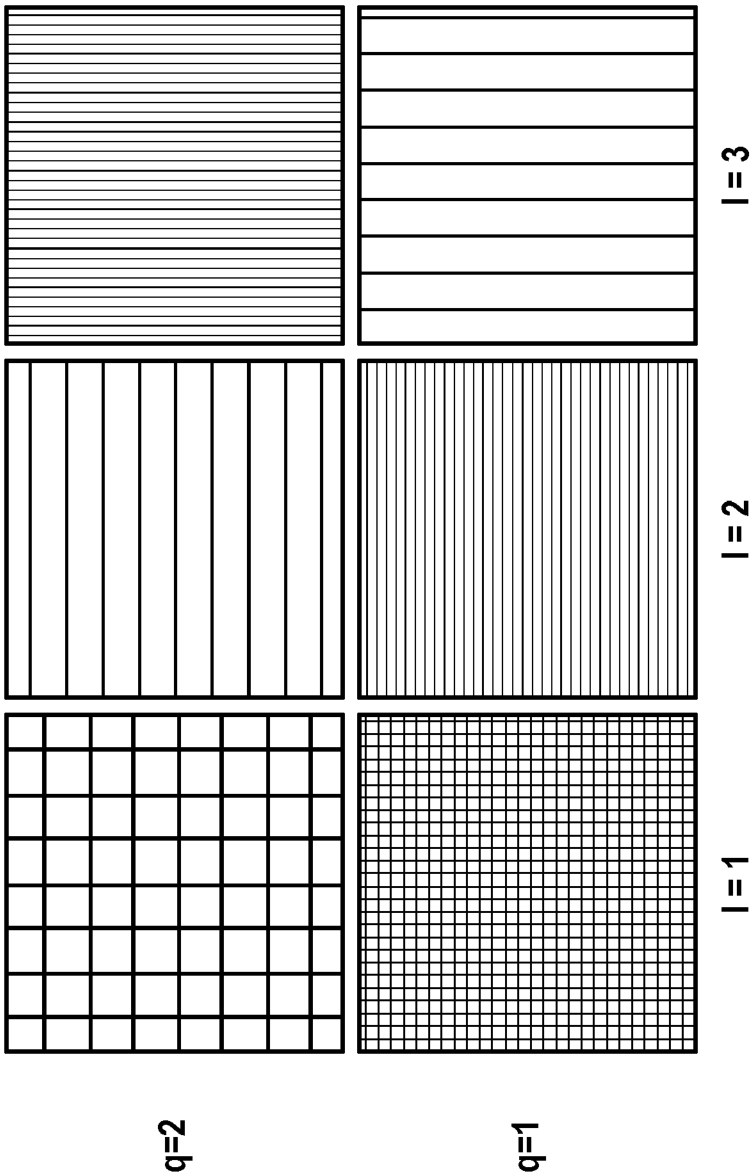


FIG. 7b

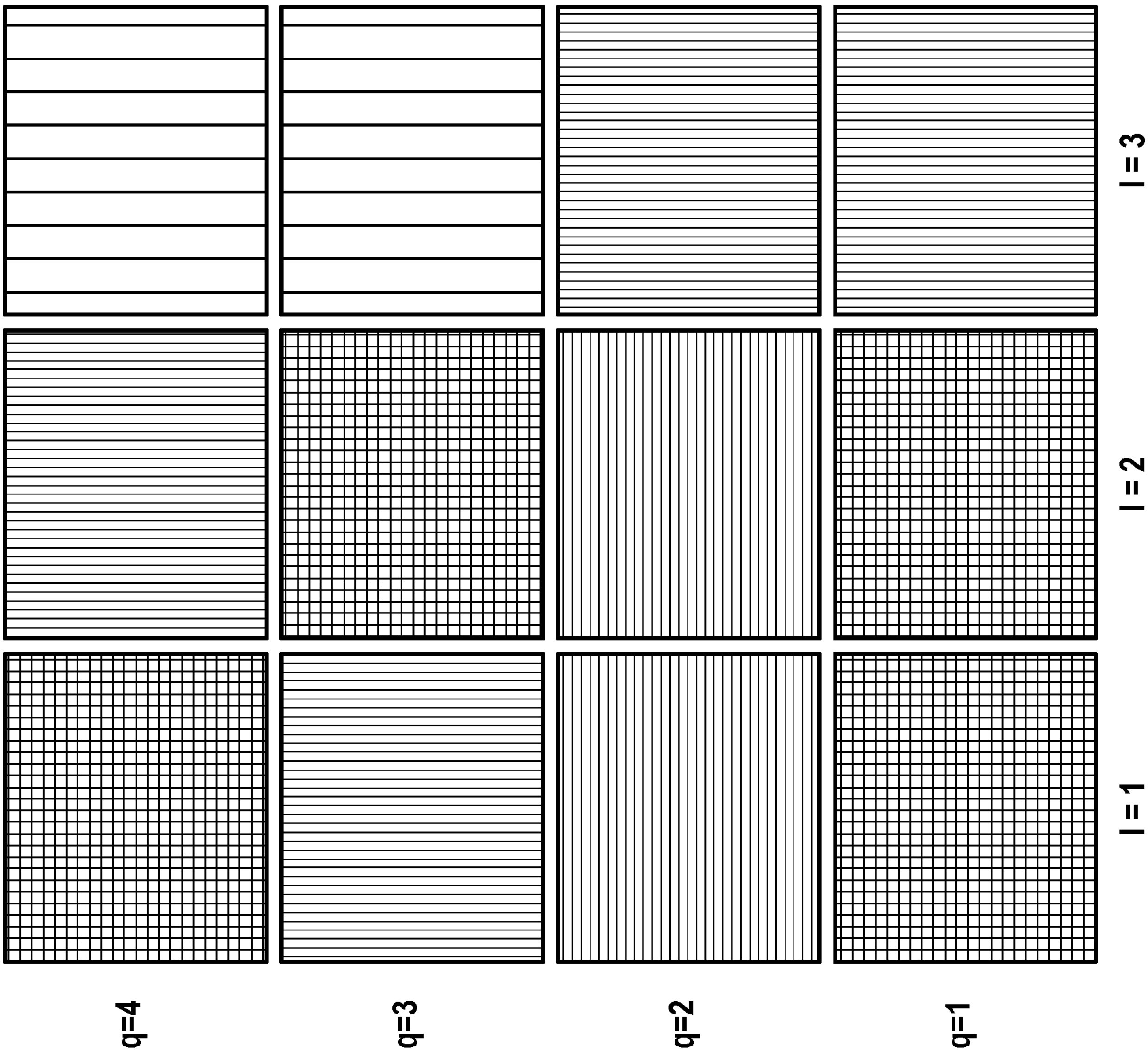


FIG. 7c

FIG. 8a

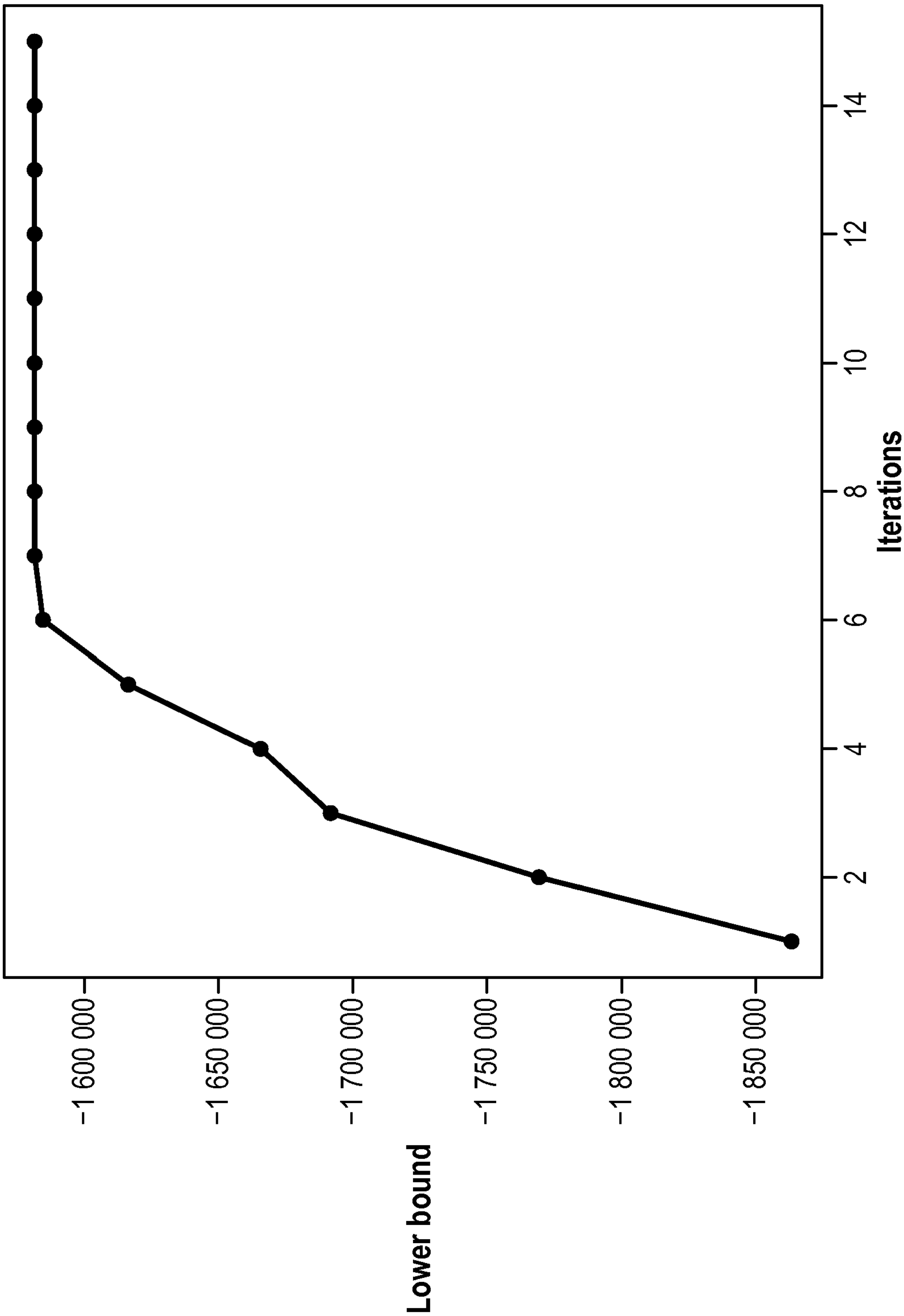
Lower bound
−1 600 000
−1 650 000
−1 700 000
−1 750 000
−1 800 000
−1 850 000
Iterations
2
4
6
8
10
12
14

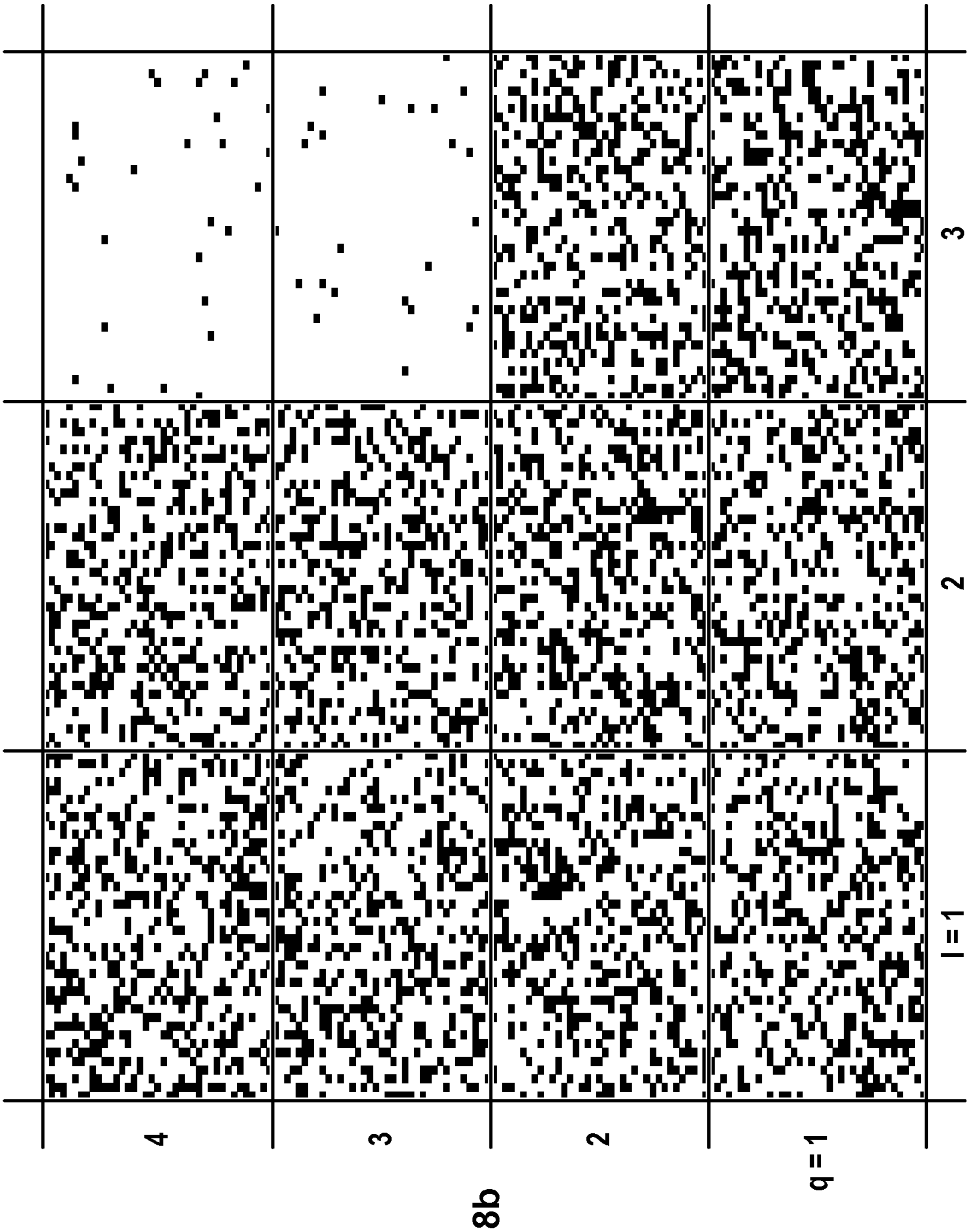


FIG. 8b

FIG. 9

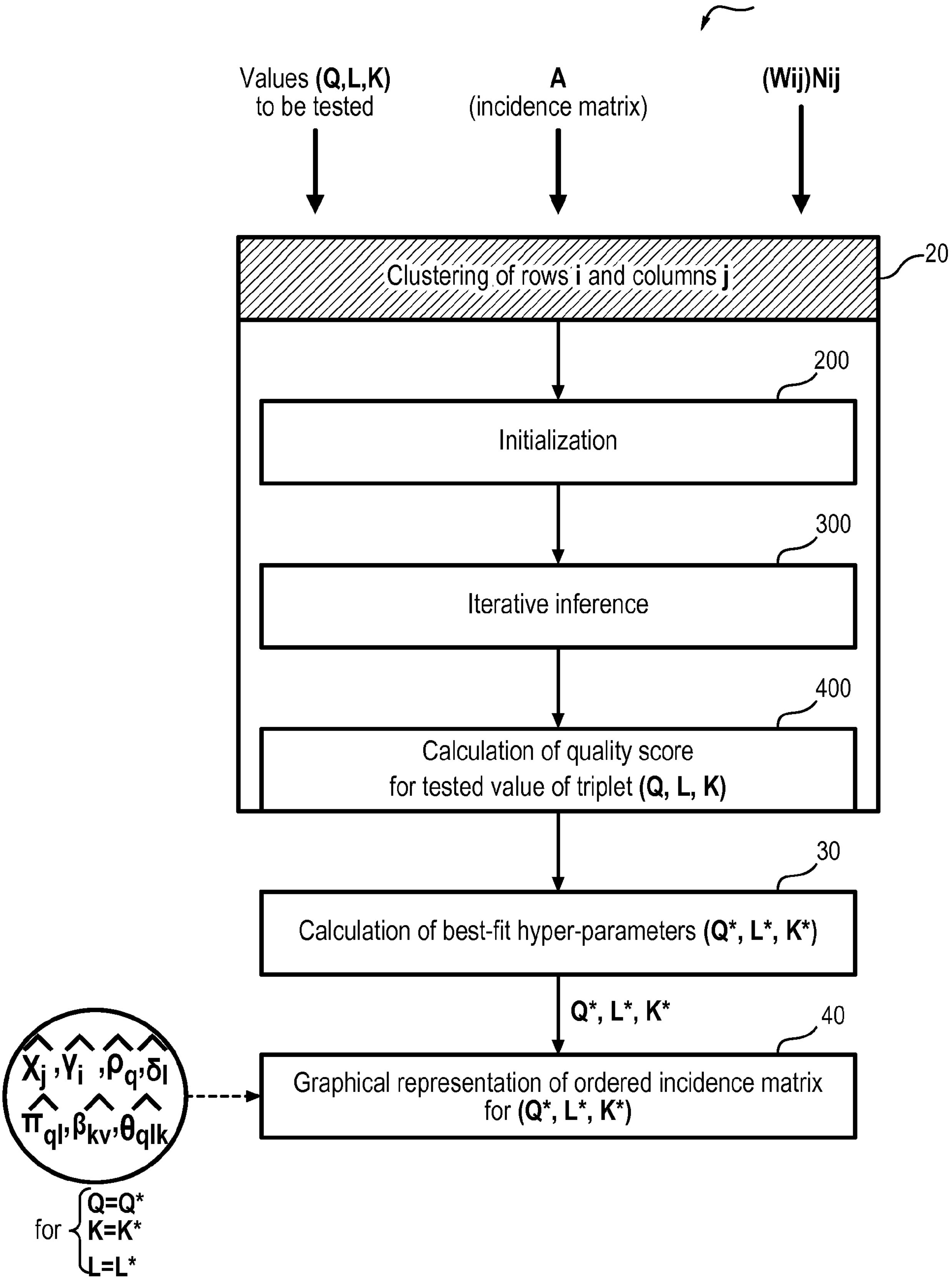
Values (Q,L,K) to be tested
A (incidence matrix)
(Wij)Nij
Clustering of rows i and columns j
20
200
Initialization
300
Iterative inference
400
Calculation of quality score for tested value of triplet (Q, L, K)
30
Calculation of best-fit hyper-parameters (Q*, L*, K*)
Q*, L*, K*
40
Graphical representation of ordered incidence matrix for (Q*, L*, K*)
$\hat{X}_j, \hat{Y}_i, \hat{\rho}_q, \hat{\delta}_l, \hat{\pi}_{ql}, \hat{\beta}_{kv}, \hat{\theta}_{qlk}$
for Q=Q*, K=K*, L=L*

FIG. 10

K = 3

| Q/L | 2 | 3 | 4 | 5 |
|---|---|---|---|---|
| 2 | 0 | 0 | 0 | 0 |
| 3 | 0 | 0 | 0 | 0 |
| 4 | 0 | 47 | 0 | 0 |
| 5 | 0 | 0 | 1 | 0 |

K = 4

| Q/L | 2 | 3 | 4 | 5 |
|---|---|---|---|---|
| 2 | 0 | 0 | 0 | 0 |
| 3 | 0 | 0 | 0 | 0 |
| 4 | 0 | 2 | 0 | 0 |
| 5 | 0 | 0 | 0 | 0 |

FIG. 11

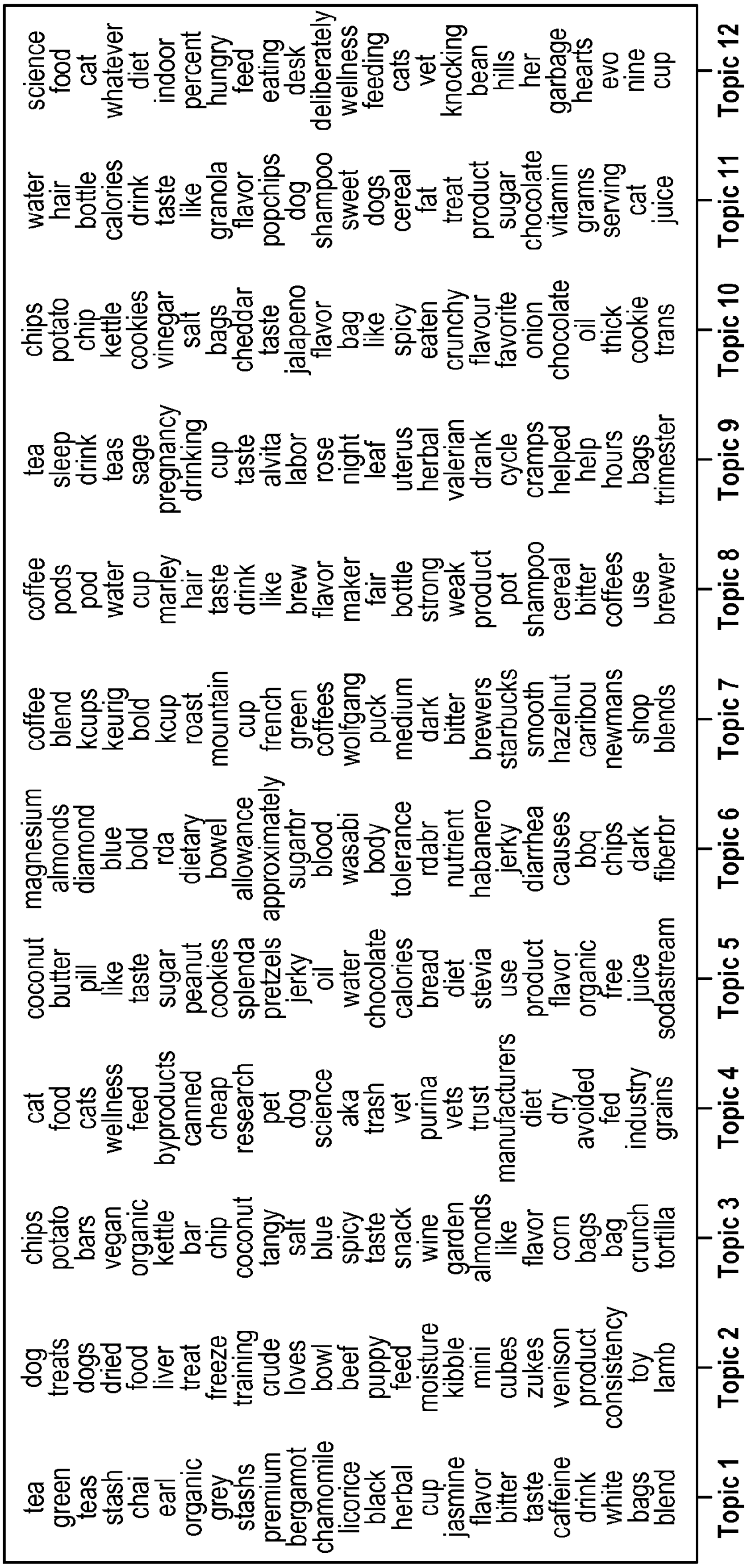
Topic 1: tea green teas stash chai earl organic grey stashs premium bergamot chamomile licorice black herbal cup jasmine flavor bitter taste caffeine drink white bags blend
Topic 2: dog treats dogs dried food liver treat freeze training crude loves bowl beef puppy feed moisture kibble mini cubes zukes venison product consistency toy lamb
Topic 3: chips potato bars vegan organic kettle bar chip coconut tangy salt blue spicy taste snack wine garden almonds like flavor corn bags bag crunch tortilla
Topic 4: cat food cats wellness feed byproducts canned cheap research pet dog science aka trash vet purina vets trust manufacturers diet dry avoided fed industry grains
Topic 5: coconut butter pill like taste sugar peanut cookies splenda pretzels jerky oil water chocolate calories bread diet stevia use product flavor organic free juice sodastream
Topic 6: magnesium almonds diamond blue bold rda dietary bowel allowance approximately sugarbr blood wasabi body tolerance rdabr nutrient habanero jerky diarrhea causes bbq chips dark fiberbr
Topic 7: coffee blend kcups keurig bold kcup roast mountain cup french green coffees wolfgang puck medium dark bitter brewers starbucks smooth hazelnut caribou newmans shop blends
Topic 8: coffee pods pod water cup marley hair taste drink like brew flavor maker fair bottle strong weak product pot shampoo cereal bitter coffees use brewer
Topic 9: tea sleep drink teas sage pregnancy drinking cup taste alvita labor rose night leaf uterus herbal valerian drank cycle cramps helped help hours bags trimester
Topic 10: chips potato chip kettle cookies vinegar salt bags cheddar taste jalapeno flavor bag like spicy eaten crunchy flavour favorite onion chocolate oil thick cookie trans
Topic 11: water hair bottle calories drink taste like granola flavor popchips dog shampoo sweet dogs cereal fat treat product sugar chocolate vitamin grams serving cat juice
Topic 12: science food cat whatever diet indoor percent hungry feed eating desk deliberately wellness feeding cats vet knocking bean hills her garbage hearts evo nine cup

FIG. 12

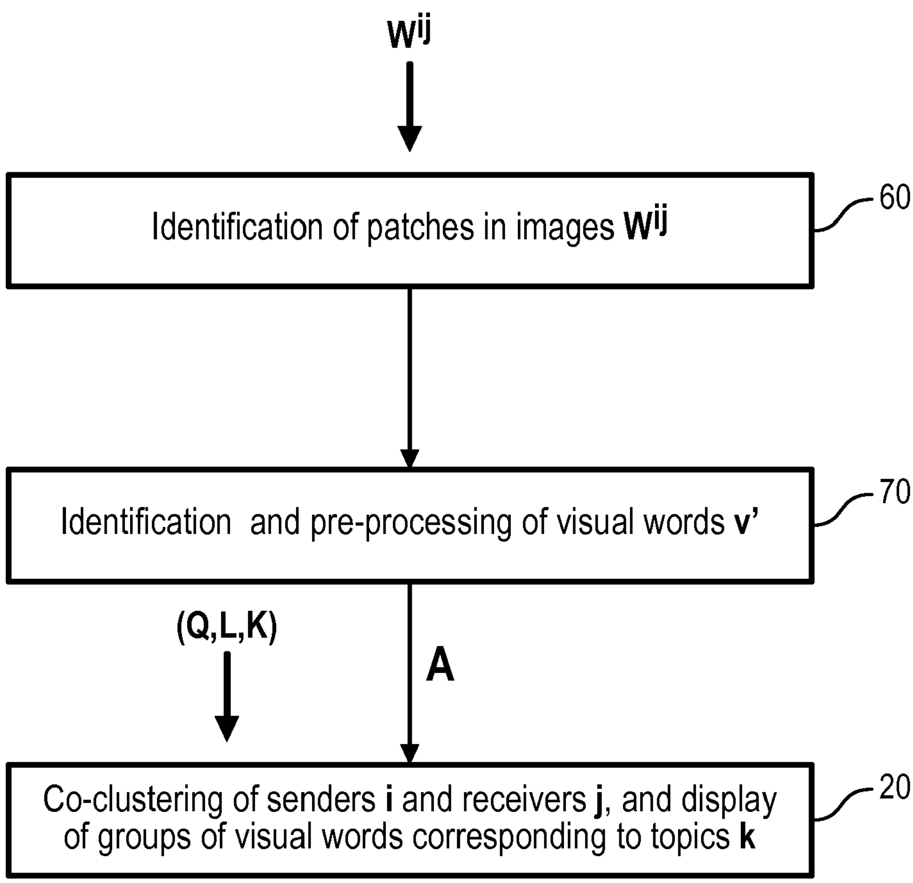

$W^{ij}$
Identification of patches in images $W^{ij}$
60
Identification and pre-processing of visual words v'
70
(Q,L,K)
A
Co-clustering of senders i and receivers j, and display of groups of visual words corresponding to topics k
20

FIG. 13

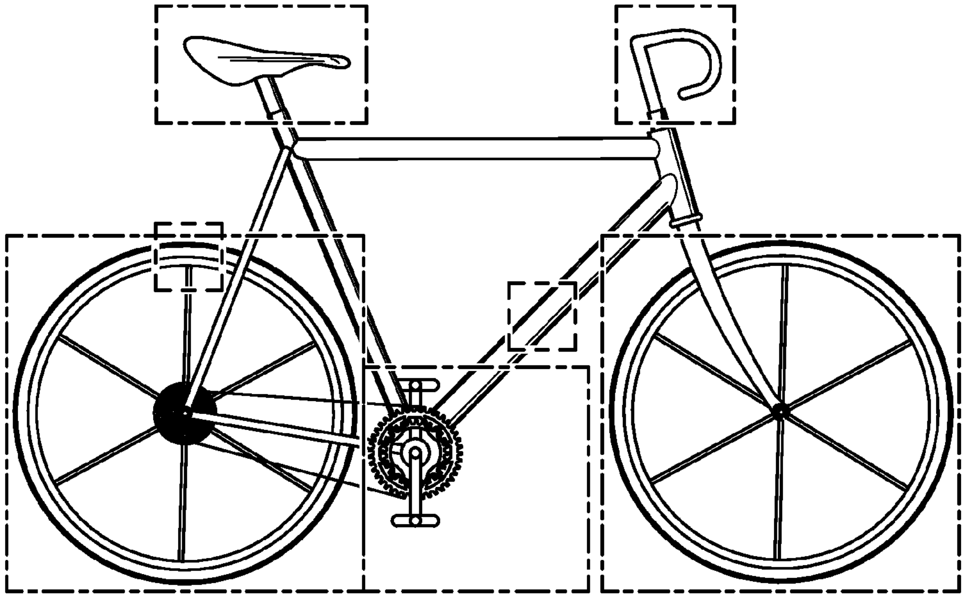

FIG. 14

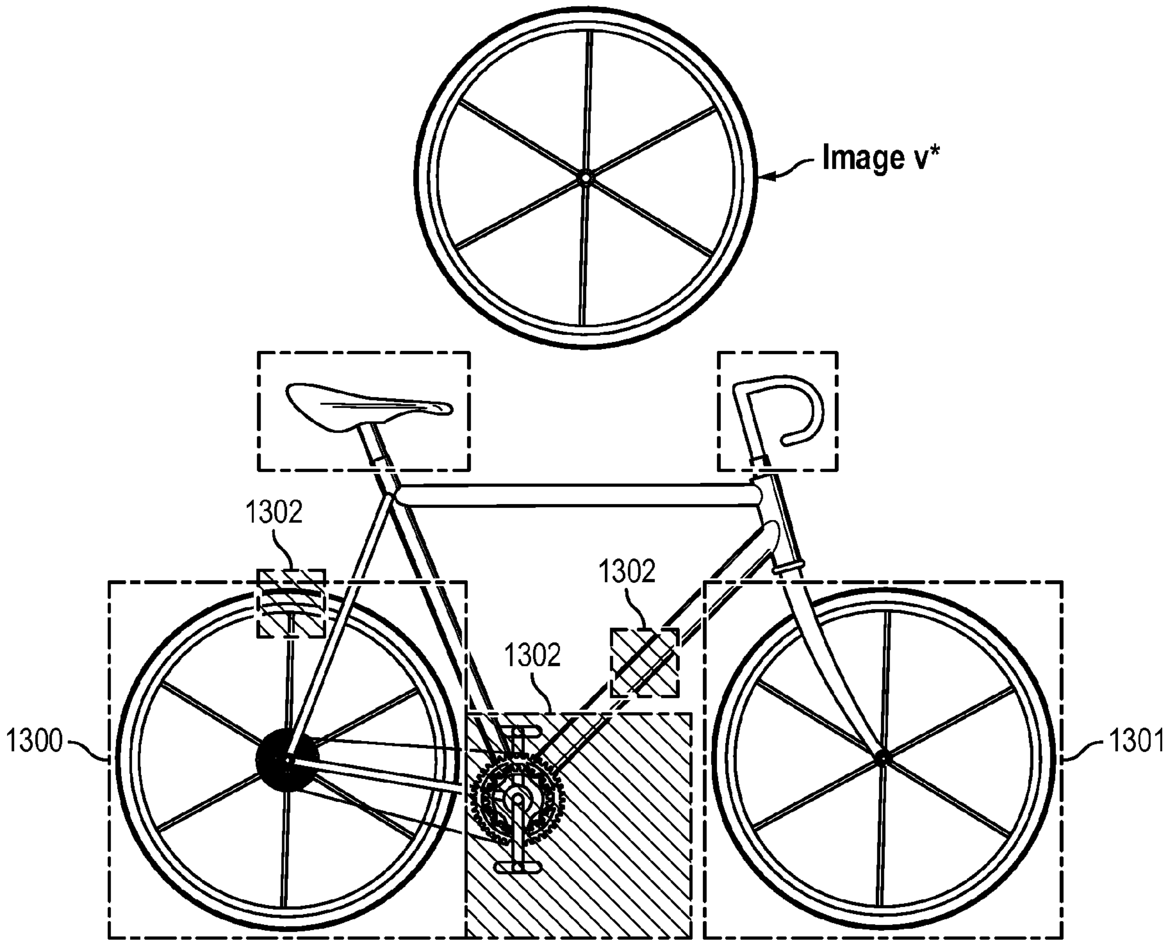

FIG. 15

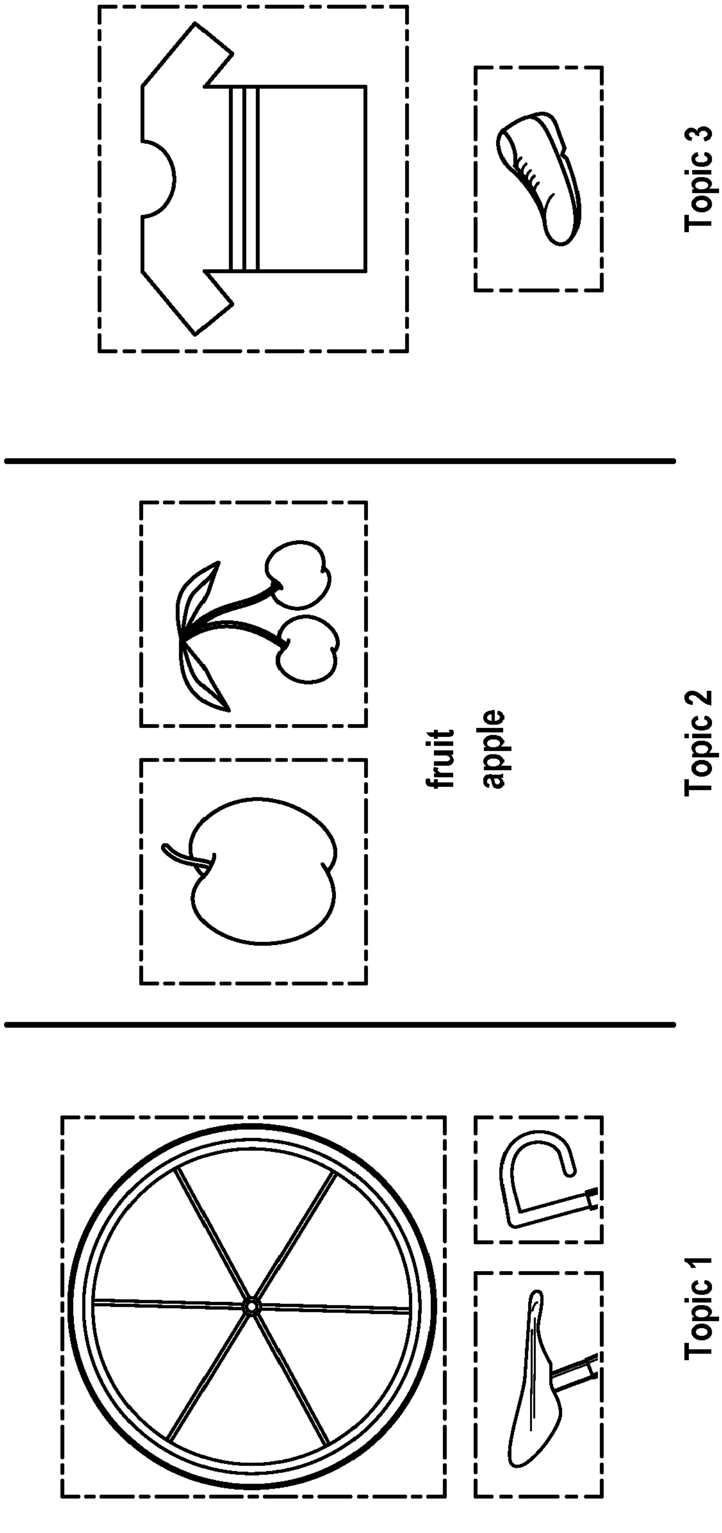

Europäisches Patentamt
European Patent Office
Office européen des brevets

# EUROPEAN SEARCH REPORT

Application Number
EP 18 30 5896

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/116316 A1 (SHIN HELEN H [US] ET AL) 27 April 2017 (2017-04-27)<br>* abstract *<br>* paragraph [0001] - paragraph [0005] *<br>* paragraph [0008] - paragraph [0021] *<br>* paragraph [0025] - paragraph [0054] *<br>----- | 1-20 | INV.<br>G06F17/30 |
| X | BOUVEYRON C ET AL: "The stochastic topic block model for the clustering of vertices in networks with textual edges",<br>STATISTICS AND COMPUTING, LONDON, GB,<br>vol. 28, no. 1,<br>21 October 2016 (2016-10-21), pages 11-31,<br>XP036406210,<br>ISSN: 0960-3174, DOI:<br>10.1007/S11222-016-9713-7<br>[retrieved on 2016-10-21]<br>* abstract *<br>* page 11, right-hand column, line 1 - page 17, right-hand column, line 9 *<br>* page 18, left-hand column, line 25 - page 20, right-hand column, line 19 *<br>* page 27, left-hand column, line 21 - page 27, right-hand column, line 6 *<br>-----<br>-/-- | 1-20 | TECHNICAL FIELDS SEARCHED (IPC)<br>G06F |

The present search report has been drawn up for all claims

1

| Place of search | Date of completion of the search | Examiner |
|---|---|---|
| The Hague | 22 October 2018 | Boyadzhiev, Yavor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 18 30 5896

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | AILEM MELISSA ET AL: "Sparse Poisson Latent Block Model for Document Clustering", IEEE TRANSACTIONS ON KNOWLEDGE AND DATA ENGINEERING, IEEE SERVICE CENTER, LOS ALAMITOS, CA, US, vol. 29, no. 7, 1 July 2017 (2017-07-01), pages 1563-1576, XP011651529, ISSN: 1041-4347, DOI: 10.1109/TKDE.2017.2681669 [retrieved on 2017-06-02] * abstract * * page 1563, left-hand column, line 1 - page 1567, left-hand column, line 26 * * page 1568, left-hand column, line 23 - page 1569, left-hand column, line 17 * ----- | 1-20 | |

TECHNICAL FIELDS SEARCHED (IPC)

The present search report has been drawn up for all claims

1

| Place of search | Date of completion of the search | Examiner |
|---|---|---|
| The Hague | 22 October 2018 | Boyadzhiev, Yavor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO. EP 18 30 5896

This annex lists the patent family members relating to the patent documents cited in the above-mentioned European search report. The members are as contained in the European Patent Office EDP file on
The European Patent Office is in no way liable for these particulars which are merely given for the purpose of information.

22-10-2018

| Patent document cited in search report | Publication date | Patent family member(s) | Publication date |
|---|---|---|---|
| US 2017116316 A1 | 27-04-2017 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- A scalable collaborative filtering framework based on co-clustering. **THOMAS GEORGE ; SRUJANA MERUGU.** Data Mining, Fifth IEEE International Conference. IEEE, 2005, 4
- **ARINDAM BANERJEE ; INDERJIT DHILLON ; JOYDEEP GHOSH ; SRUJANA MERUGU ; DHARMENDRA S. MODHA.** A generalized maximum entropy approach to Bregman co-clustering and matrix approximation. *Journal of Machine Learning Research,* 08 August 2007, 1919-1986
- **SHIPING WANG ; AIPING HUANG.** Penalized nonnegative matrix tri-factorization for co-clustering. *Expert Systems with Applications,* 2017, vol. 78, 64-73
- **GERARD GOVAERT ; MOHAMED NADIF.** Clustering with block mixture models. *Pattern Recognition,* 2003, vol. 36 (2), 463-473
- **GERARD GOVAERT ; MOHAMED NADIF.** Latent block model for contingency table. *Communications in Statistics: Theory and Methods,* 2010, vol. 39 (3), 416-425
- **CHRISTINE KERIBIN ; VINCENT BRAULT ; GILLES CELEUX ; GERARD GOVAERT.** Estimation and selection for the latent block model on categorical data. *Statistics and Computing,* 2015, vol. 25 (6), 1201-1216
- **JULIEN JACQUES ; CHRISTOPHE BIERNACKI.** *Model-based co-clustering for ordinal data,* 2017
- **D.M. BLEI ; A. Y. NG ; M. I. JORDAN.** Latent Dirichlet Allocation. *Journal of Machine Learning Research,* 2003, vol. 3, 993-1022
- Latent Dirichlet Bayesian Co-Clustering. **PU WANG ; CARLOTTA DOMENICONI ; KATHRYN BLACKMOND LASKEY.** Joint European Conference on Machine Learning and Knowledge Discovery in Databases. Springer, 2009, 522-537
- **ULRIKE VON LUXBURG.** A tutorial on spectral clustering. *Statistics and Computing,* 2007, vol. 17 (4), ISSN 1573-1375, 395-416, http://dx.doi.org/10.1007/s11222-007-9033-z
- **CHRISTINE KERIBIN ; VINCENT BRAULT ; GILLES CELEUX ; GERARD GOVAERT et al.** Model selection for the binary latent block model. *Proceedings of COMPSTAT,* vol. 2012, 2012